(19)

Europäisches Patentamt

European Patent Office

Office européen des brevets

(11) **EP 4 440 222 A1**

(12) **EUROPEAN PATENT APPLICATION**
published in accordance with Art. 153(4) EPC

(43) Date of publication:
**02.10.2024 Bulletin 2024/40**

(21) Application number: **22916416.5**

(22) Date of filing: **14.11.2022**

(51) International Patent Classification (IPC):
**H04W 72/04** (2023.01)      **H04L 5/00** (2006.01)
**H04L 5/14** (2006.01)

(52) Cooperative Patent Classification (CPC):
**H04L 5/00; H04L 5/14; H04W 72/04**

(86) International application number:
**PCT/KR2022/017847**

(87) International publication number:
**WO 2023/128262 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021   KR 20210189834**

(71) Applicant: **Samsung Electronics Co., Ltd.
Suwon-si, Gyeonggi-do 16677 (KR)**

(72) Inventors:
• **LEE, Juyeong
  Suwon-si, Gyeonggi-do 16677 (KR)**
• **GHA, Heedon
  Suwon-si, Gyeonggi-do 16677 (KR)**

(74) Representative: **Nederlandsch Octrooibureau
P.O. Box 29720
2502 LS The Hague (NL)**

(54) **METHOD AND DEVICE FOR PUCCH TRANSMISSION/RECEPTION IN WIRELESS COMMUNICATION SYSTEM**

(57)    The present disclosure relates to: a communication technique for converging IoT technology with 5G communication systems for supporting a higher data transfer rate beyond 4G systems; and a system therefor. The present disclosure may be applied to intelligent services (for example, smart homes, smart buildings, smart cities, smart cars or connected cars, healthcare, digital education, retail businesses, security- and safety-related services, etc.) on the basis of 5G communication technology and IoT-related technology. In addition, the present disclosure relates to a method and a device for physical uplink control channel (PUCCH) transmission/reception in a wireless communication system.

FIG. 1

EP 4 440 222 A1

**Description**

[Technical Field]

The disclosure relates to a method and a device for transmitting or receiving a physical uplink control channel (PUCCH) in a wireless communication system and, more specifically, to a method and a device for transmitting or receiving a PUCCH in a communication system supporting XDD which can flexibly divide an uplink resource and a downlink resource in a time domain and a frequency domain.

[Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G Network" communication system or a "post LTE" system. The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in the 5G communication system. In addition, in the 5G communication system, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like. In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (cloud RAN) as the above-described big data processing technology may also be considered an example of convergence of the 5G technology with the IoT technology.

In order to enhance coverage of a base station and a terminal, not only can uplink and downlink resources be divided in a time domain according to the proportion of uplink and downlink traffic, as in a time division duplex (TDD) system, but also uplink and downlink resources can also be divided in a frequency domain, as in a frequency division duplex (FDD) system. As such, a system which can flexibly divide an uplink resource and a downlink resource in a time domain and a frequency domain may be referred to as an XDD system, a flexible TDD system, a hybrid TDD system, a TDD-FDD system, a hybrid TDD-FDD system, etc. For convenience of description, the system is described as an XDD system in this disclosure. In XDD, X may refer to a time or a frequency.

[Disclosure]

[Technical Problem]

In an XDD system, a part or the entire of a configured PUCCH resource may be configured as a downlink resource due to an XDD configuration and thus cannot be used for PUCCH transmission. Therefore, a method for transmitting a PUCCH in consideration of a downlink resource according to such an XDD configuration is required.

[Technical Solution]

A method of a terminal in a communication system according to an embodiment of the disclosure to solve the above problem may include: receiving XDD configuration information for configuring an uplink-downlink resource configuration of the terminal from a base station; identifying whether a physical uplink control channel (PUCCH) resource of a first slot satisfies a preconfigured condition, based on the XDD configuration information; and transmitting a PUCCH to the base station, based on whether the PUCCH resource of the first slot satisfies the preconfigured condition.

According to an embodiment, the identifying of whether the PUCCH resource of the first slot satisfies the preconfigured condition may include, in case that at least a part of the first slot includes a downlink resource, the PUCCH resource configured in the first slot includes a downlink resource, or the PUCCH resource configured in the first slot includes downlink resources, the number of which is larger than or equal to a predetermined range, identifying that the PUCCH resource of the first slot satisfies the preconfigured condition.

According to an embodiment, the method may include: in case that the PUCCH resource of the first slot is identified to satisfy the preconfigured condition, dropping PUCCH transmission; based on a PUCCH resource of a second slot that does not satisfy the preconfigured condition, transmitting the PUCCH in the second slot; or transmitting the PUCCH in the first slot, based on a scaled PUCCH resource excluding a downlink resource based on the XDD configuration information in the configured PUCCH resource.

According to an embodiment, the transmitting of the PUCCH to the base station may include transmitting the PUCCH, further based on whether scaling is applicable to the configured PUCCH resource.

The transmitting of the PUCCH to the base station may include transmitting the PUCCH, further based on whether PUCCH transmission is possible in a slot including a downlink resource.

In an embodiment, the method may include: determining a PUCCH resource among configured PUCCH resources in consideration of a downlink resource based on the XDD configuration information; or determining a resource to be used for actual PUCCH transmission in consideration of a downlink resource based on the XDD configuration information.

In an embodiment, the method may include mapping a demodulation reference signal (DMRS) sequence for the PUCCH to a symbol and transmitting the mapped sequence, in consideration of a downlink resource based on the XDD configuration information.

A terminal in a communication system according to an embodiment of the disclosure may include: a transceiver; and a controller configured to receive XDD configuration information for configuring an uplink-downlink resource configuration of the terminal from a base station, identify whether a physical uplink control channel (PUCCH) resource of a first slot satisfies a preconfigured condition, based on the XDD configuration information, and transmit a PUCCH to the base station, based on whether the PUCCH resource of the first slot satisfies the preconfigured condition.

A method of a base station in a communication system according to an embodiment of the disclosure may include: transmitting XDD configuration information for configuring an uplink-downlink resource configuration of a terminal to the terminal; and receiving, from the terminal, a physical uplink control channel (PUCCH) transmitted based on whether a PUCCH resource of a first slot satisfies a preconfigured condition according to the XDD configuration information.

A base station in a communication system according to an embodiment of the disclosure may include: a transceiver; and a controller configured to transmit XDD configuration information for configuring an uplink-downlink resource configuration of a terminal to the terminal, and receive, from the terminal, a physical uplink control channel (PUCCH) transmitted based on whether a PUCCH resource of a first slot satisfies a preconfigured condition according to the XDD configuration information.

[Advantageous Effects]

According to the disclosure, an efficient PUCCH resource allocation method in a communication system supporting XDD may be provided.

[Description of Drawings]

FIG. 1 is a view illustrating a basic structure of a time-frequency domain that is a radio resource domain in which data or a control channel is transmitted in a 5G wireless communication system.
FIG. 2 is a view illustrating an example of a slot structure used in a 5G wireless communication system.
FIG. 3 is a view illustrating an example of a bandwidth part (BWP) configuration in a 5G wireless communication system.
FIG. 4 illustrates an example of a control resource set through which a downlink control channel is transmitted in a 5G wireless communication system;

FIG. 5 illustrates a structure of a downlink control channel in a 5G wireless communication system;
FIG. 6 illustrates an example of a method for configuring uplink and downlink resources in a 5G wireless communication system;
FIG. 7 illustrates an example of an uplink-downlink resource configuration of an XDD system according to an embodiment of the disclosure;
FIG. 8 illustrates an example in which a PUCCH resource is allocated in an XDD system according to an embodiment of the disclosure;
FIG. 9 illustrates an example of a method for transmitting a PUCCH in an XDD system according to an embodiment of the disclosure;
FIG. 10 illustrates another example of a method for transmitting a PUCCH in an XDD system according to an embodiment of the disclosure;
FIG. 11 illustrates another example of a method for transmitting a PUCCH in an XDD system according to an embodiment of the disclosure.
FIG. 12 illustrates an example of a method for transmitting a PUCCH DMRS in an XDD system according to an embodiment of the disclosure;
FIG. 13 illustrates another example of a method for transmitting a PUCCH DMRS in an XDD system according to an embodiment of the disclosure;
FIG. 14 illustrates another example of a method for transmitting a PUCCH DMRS in an XDD system according to an embodiment of the disclosure;
FIG. 15 illustrates a UE operation of transmitting a PUCCH in an XDD system according to an embodiment of the disclosure;
FIG. 16 illustrates a base station operation of receiving a PUCCH in an XDD system according to an embodiment of the disclosure;
FIG. 17 illustrates a structure of a UE according to an embodiment of the disclosure; and
FIG. 18 illustrates a structure of a base station according to an embodiment of the disclosure.

[Mode for Invention]

Hereinafter, embodiments of the disclosure will be described in detail with reference to the accompanying drawings.

In describing the embodiments, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (SG, new radio, and NR) developed beyond LTE-A, and in the following description, the "5G" may be the concept that covers the exiting LTE, LTE-A, or other similar services. In addition, based on determinations by those skilled in the art, the embodiments of the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in the embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

A wireless communication system is advancing to a broadband wireless communication system for providing high-speed and high-quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink indicates a radio link through which a user equipment (UE) (or a mobile station (MS)) transmits data or control signals to a base station (BS) (eNode B), and the downlink indicates a radio link through which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and also requires a packet error rate of 10-5 or less. Therefore, for the services supporting URLLC, a 5G system must provide a transmit time interval (TTI) shorter than those of other services, and also may require a design for assigning a large number of resources in a frequency band in order to secure reliability of a communication link.

The three 5G services, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the above-described three services.

Hereinafter, the frame structure of a 5G system will be described in more detail with reference to the accompanying drawings.

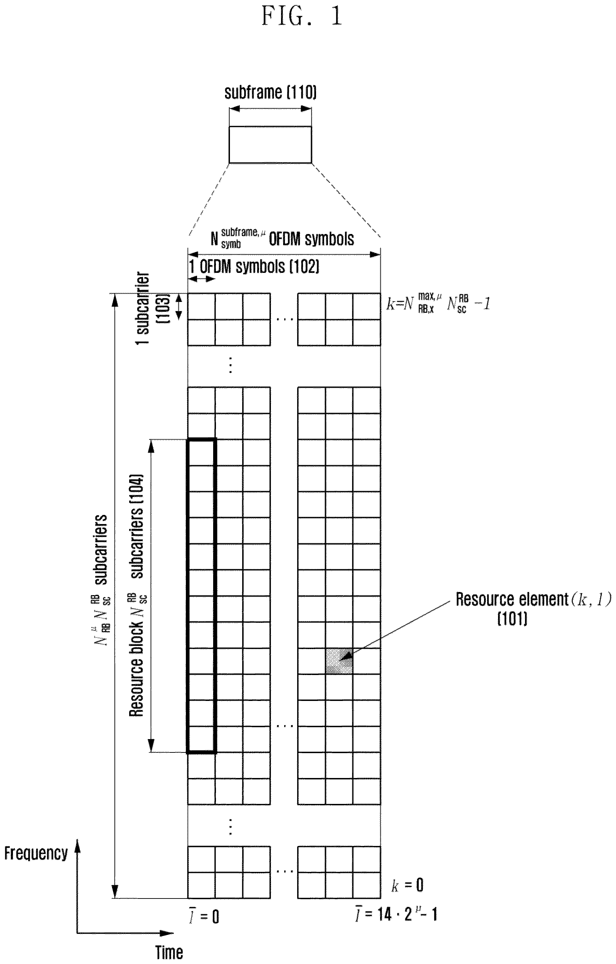

FIG. 1 illustrates the basic structure of a time-frequency domain that is a radio resource domain in which data or a control channel is transmitted in a 5G wireless communication system.

Referring to FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{sc}^{RB}$ (e.g., 12) consecutive REs may constitute one resource block (RB) 104.

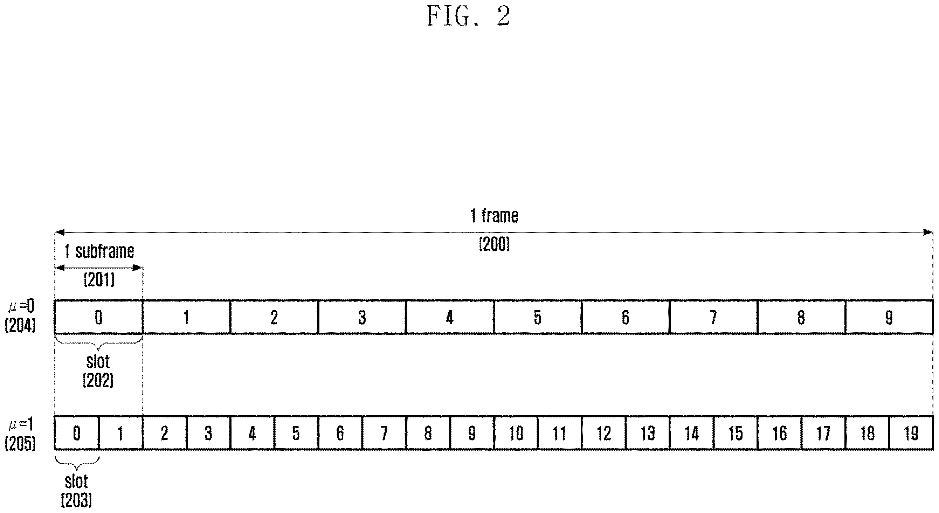

FIG. 2 illustrates an example of a slot structure used in a 5G wireless communication system.

Referring to FIG. 2, an example of the structure of a frame 200, a subframe 201, and a slot 202 is illustrated. One frame 200 may be defined as 10ms. One subframe 201 may be defined as 1ms. Therefore, one frame 200 may include a total of ten subframes 201. One slot 202 or 203 may be defined as 14 OFDM symbols (that is, the number of symbols per one slot $N_{symb}^{slot}=14$). One subframe 201 may include one slot or multiple slots 202 and 203. The number of slots 202 and 203 per one subframe 201 may differ depending on configuration values $\mu$ 204 and 205 regarding the subcarrier spacing. The example in FIG. 2 illustrates a case in which the subcarrier spacing configuration value is $\mu=0$ (204), and a case in which $\mu=1$ (205). In the case of $\mu=0$ (204), one subframe 201 may include one slot 202. In the case of $\mu=1$ (205), one subframe 201 may include two slots 203. That is, the number of slots per one subframe $N_{slot}^{subframe,\,\mu}$ may differ depending on the subcarrier spacing configuration value $\mu$, and the number of slots per one frame $N_{slot}^{frame,\mu}$ may differ accordingly. $N_{slot}^{subframe,\,\mu}$ and $N_{slot}^{frame,\mu}$ may be defined according to each subcarrier spacing configuration $\mu$ as in Table 1 below:

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| $\mu$ | $N_{symb}^{slot}$ | $N_{slot}^{frame,\mu}$ | $N_{slot}^{subframe,\mu}$ |
|---|---|---|---|
| 4 | 14 | 160 | 16 |
| 5 | 14 | 320 | 32 |

Next, bandwidth part (BWP) configuration in a 5G communication system will be described in detail with reference to the accompanying drawings.

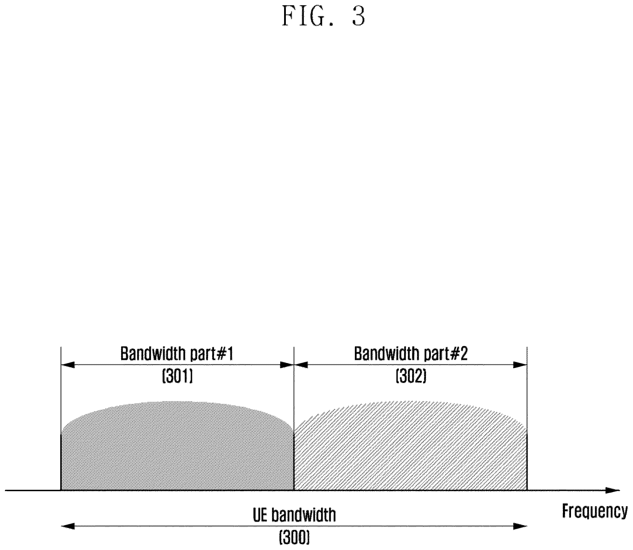

FIG. 3 illustrates an example of a bandwidth part (BWP) configuration in a 5G wireless communication system.

Referring to FIG. 3, an example in which a UE bandwidth 300 is configured to include two bandwidth parts, that is bandwidth part #1 (BWP#1) 301 and bandwidth part #2 (BWP#2) 302, is illustrated. A base station may configure one or multiple bandwidth parts for a UE, and may configure the following pieces of information with regard to each bandwidth part.

[Table 2]

```
BWP ::=                          SEQUENCE {
    bwp-Id                       BWP-Id,
    locationAndBandwidth         INTEGER (1..65536),
    subcarrierSpacing            ENUMERATED {n0, n1, n2, n3, n4, n5},
    cyclicPrefix                 ENUMERATED { extended }
}
```

Obviously, the above example is not limiting, and various parameters related to the bandwidth part may be configured for the UE, in addition to the above configuration information. The above pieces of information may be transferred from the base station to the UE through upper layer signaling, for example, radio resource control (RRC) signaling. One configured bandwidth part or at least one bandwidth part among multiple configured bandwidth parts may be activated. Whether or not to activate a configured bandwidth part may be semi-statically transferred from the base station to the UE through RRC signaling, or dynamically transferred through downlink control information (DCI).

According to an embodiment, the UE, prior to radio resource control (RRC) connection, may have an initial BWP for initial access configured by the base station through a master information block (MIB). To be more specific, the UE may receive configuration information regarding a control resource set (CORESET) and a search space which may be used to transmit a PDCCH for receiving system information (which may correspond to remaining system information (RMSI) or system information block 1 (SIB 1) necessary for initial access through the MIB in the initial access step. Each of the control resource set and the search space configured by the MIB may be considered as identity (ID) 0. The base station may notify the UE of configuration information, such as frequency allocation information regarding control resource set #0, time allocation information, and numerology, through the MIB. In addition, the base station may notify the UE of configuration information regarding the monitoring cycle and occasion regarding control resource set #0, that is, configuration information regarding control resource set #0, through the MIB. The UE may consider that a frequency domain configured by control resource set #0 acquired from the MIB is an initial bandwidth part for initial access. The identifier (ID) of the initial bandwidth part may be considered to be 0.

The bandwidth part-related configuration supported by the 5G wireless communication system may be used for various purposes.

According to an embodiment, if the bandwidth supported by the UE is smaller than the system bandwidth, this may be supported through the bandwidth part configuration. For example, the base station may configure the frequency location (configuration information 2) of the bandwidth part for the UE such that the UE can transmit/receive data at a specific frequency location within the system bandwidth.

In addition, according to an embodiment, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing, and when data is to be transmitted/received at a specific subcarrier spacing, the bandwidth part configured as the corresponding subcarrier spacing may be activated.

In addition, according to an embodiment, the base station may configure bandwidth parts having different sizes of bandwidths for the UE for the purpose of reducing power consumed by the UE. For example, if the UE supports a substantially large bandwidth (for example, 100MHz) and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth, for example, a bandwidth part of 20MHz, for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through a master information block (MIB) in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

If a UE has one or more bandwidth parts configured therefor, the base station may instruct to the UE to change (or switch) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and a UE, upon receiving a bandwidth part change request, needs to be able to receive or transmit the PDSCH or PUSCH scheduled by the corresponding DCI in the changed bandwidth part with no problem. To this end, a requirement regarding the delay time (TBWP) required during a bandwidth part change are specified standards, and may be defined, for example, as follows:

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirement regarding the bandwidth part change delay time supports type 1 or type 2, depending on the capability of the UE. The UE may report the supportable bandwidth part delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+TBWP, and may transmit/receive a data channel scheduled by the corresponding DCI in the newly changed bandwidth part. If the base station wants to schedule a data channel by using the new bandwidth part, the base station may determine time domain resource allocation regarding the data channel in view of the UE's bandwidth part change delay time (TBWP). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time (TBWP).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (that is, the last symbol of slot n+K-1).

Next, a synchronization signal (SS)/PBCH block in a 5G wireless communication system will be described.

An SS/PBCH block may refer to a physical layer channel block including a primary SS (PSS), a secondary SS (SSS), and a PBCH. Details thereof are as follows:

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may play the role of a reference signal for PBCH demodulation.
- PBCH: provides essential system information necessary for the UE's data channel and control channel transmission/reception. The essential system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time of 5ms, and each transmitted SS/PBCH block may be distinguished by an index.

The UE may detect the PSS and the SSS in the initial access step, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 is quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in view of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

Next, downlink control information (DCI) in a 5G wireless communication system will be described in detail.

In the 5G system, scheduling information for uplink data (or physical uplink shared channel (PUSCH)) or downlink data (or physical downlink shared channel (PDSCH)) may be transmitted from a base station to a UE through DCI. The UE may monitor a DCI format for fallback and a DCI format for non-fallback with respect to a PUSCH or a PDSCH. The DCI format for fallback may include a fixed field predefined between the base station and the UE, and the DCI format for non-fallback may include a configurable field.

The DCI may be transmitted through a physical downlink control channel (PDCCH) through channel coding and modulation processes. A cyclic redundancy check (CRC) is attached to a DCI message payload, and the CRC may be scrambled by a radio network temporary identifier (RNTI) corresponding to the UE's identity. Different RNTIs may be used depending on the purpose of a DCI message, for example, UE-specific data transmission, a power control command, or a random access response. That is, the RNTI is not explicitly transmitted but is included in a CRC calculation process and transmitted. When a DCI message transmitted through the PDCCH is received, the UE may identify the CRC by using the allocated RNTI, and if a result of identifying the CRC is correct, the UE is aware that the corresponding message has been transmitted to the UE.

For example, DCI for scheduling a PDSCH for system information (SI) may be scrambled by an SI-RNTI. DCI for scheduling a PDSCH for a random access response (RAR) message may be scrambled by an RA-RNTI. DCI for scheduling a PDSCH for a paging message may be scrambled by a P-RNTI. DCI for notifying a slot format indicator (SFI) may be scrambled by an SFI-RNTI. DCI for notifying a transmit power control (TPC) may be scrambled by a TPC-RNTI. DCI for scheduling a UE-specific PDSCH or PUSCH may be scrambled by a cell RNTI (C-RNTI), a modulation coding scheme C-RNTI (MCS-C-RNTI), and a configured scheduling RNTI (CS-RNTI).

DCI format 0_0 may be used as fallback DCI for scheduling a PUSCH, and in this case, a CRC may be scrambled by a C-RNTI. The DCI format 0_0, in which the CRC is scrambled by the C-RNTI, may include, for example, the following information.

[Table 4]

- Identifier for DCI formats - 1 bit

    - The value of this bit field is always set to 0, indicating an UL DCI format

- Frequency domain resource assignment- $\left\lceil log_2( N_{RB}^{UL,BWP}(N_{RB}^{UL,BWP} +\ 1)/2)\right\rceil$ bits where $N_{RB}^{UL,BWP}$ is defined in subclause 7.3.1.0

    - For PUSCH hopping with resource allocation type 1:

        - $N_{UL\_hop}$ MSB bits are used to indicate the frequency offset according to Subclause 6.3 of [6, TS 38.214], where $N_{UL\_hop}$ = 1 if the higher layer parameter *frequencyHoppingOffsetLists* contains two offset values and $N_{UL\_hop}$ = 2 if the higher layer parameter *frequencyHoppingOffsetLists* contains four offset values

        - $\left\lceil log_2( N_{RB}^{UL,BWP}(N_{RB}^{UL,BWP} + 1)/2)\right\rceil$ - $N_{UL\_hop}$ bits provides the frequency domain resource allocation according to Subclause 6.1.2.2.2 of [6, TS 38.214]

    - For non-PUSCH hopping with resource allocation type 1:

        - $\left\lceil log_2( N_{RB}^{UL,BWP}(N_{RB}^{UL,BWP} + 1)/2)\right\rceil$ bits provides the frequency domain resource allocation according to Subclause 6.1.2.2.2 of [6, TS 38.214]

- Time domain resource assignment- 4 bits as defined in Subclause 6.1.2.1 of [6, TS 38.214]

- Frequency hopping flag - 1 bit according to Table 7.3.1.1.1-3, as defined in Subclause 6.3 of [6, TS 38.214]

- Modulation and coding scheme- 5 bits as defined in Subclause 6.1.4.1 of [6, TS 38.214]

- New data indicator - 1 bit

- Redundancy version - 2 bits as defined in Table 7.3.1.1.1-2

- HARQ process number - 4 bits

- TPC command for scheduled PUSCH - 2 bits as defined in Subclause 7.1.1 of [5, TS 38.213]

- Padding bits, if required.

- UL/SUL indicator - 1 bit for UEs configured with *supplementary Uplink* in *ServingCellConfig* in the cell as defined in Table 7.3.1.1.1-1 and the number of bits for DCI format 1_0 before padding is larger than the number of bits for DCI format 0_0 before padding; 0 bit otherwise. The UL/SUL indicator, if present, locates in the last bit position of DCI format 0_0, after the padding bit(s).

    - If the UL/SUL indicator is present in DCI format 0_0 and the higher layer parameter *pusch-Config* is not configured on both UL and SUL the UE ignores the UL/SUL indicator field in DCI format 0_0, and the corresponding PUSCH scheduled by the DCI format 0_0 is for the UL or SUL for which high layer parameter *pucch-Config* is configured;

    - If the UL/SUL indicator is not present in DCI format 0_0 and *pucch-Config* is configured, the corresponding PUSCH scheduled by the DCI format 0_0 is for the UL or SUL for which high layer parameter *pucch-Config* is configured.

    - If the UL/SUL indicator is not present in DCI format 0_0 and *pucch-Config* is not configured, the corresponding PUSCH scheduled by the DCI format 0_0 is for the uplink on which the latest PRACH is transmitted.

DCI format 0_1 may be used as non-fallback DCI for scheduling a PUSCH, and in this case, a CRC may be scrambled by a C-RNTI. The DCI format 0_1, in which the CRC is scrambled by the C-RNTI, may include, for example, the following information.

[Table 5]

- Identifier for DCI formats - 1 bit

      - The value of this bit field is always set to 0, indicating an UL DCI format

- Carrier indicator - 0 or 3 bits, as defined in Subclause 10.1 of [5, TS38.213].

- UL/SUL indicator - 0 bit for UEs not configured with *supplementaryUplink* in *ServingCellConfig* in the cell or UEs configured with *supplementaryUplink* in *ServingCellConfig* in the cell but only PUCCH carrier in the cell is configured for PUSCH transmission; otherwise, 1 bit as defined in Table 7.3.1.1.1-1.

- Bandwidth part indicator - 0, 1 or 2 bits as determined by the number of UL BWPs $n_{BWP,RRC}$ configured by higher layers, excluding the initial UL bandwidth part. The bitwidth for this field is determined as $\lceil log_2(n_{BWP}) \rceil$ bits, where

    - $n_{BWP} = n_{BWP,RRC} + 1$ if $n_{BWP,RRC} \leq 3$, in which case the bandwidth part indicator is equivalent to the ascending order of the higher layer parameter *BWP-Id*;

    - otherwise $n_{BWP} = n_{BWP,RRC}$, in which case the bandwidth part indicator is defined in Table 7.3.1.1.2-1;

    If a UE does not support active BWP change via DCI, the UE ignores this bit field.

- Frequency domain resource assignment - number of bits determined by the following, where $N_{RB}^{UL,BWP}$ is the size of the active UL bandwidth part:

    - $N_{RBG}$ bits if only resource allocation type 0 is configured, where $N_{RBG}$ is defined in Subclause 6.1.2.2.1 of [6, TS 38.214],

    - $\lceil log_2( N_{RB}^{UL,BWP}(N_{RB}^{UL,BWP} + 1)/2) \rceil$ bits if only resource allocation type 1 is configured, or

$$max\left( \lceil log_2( N_{RB}^{UL,BWP}(N_{RB}^{UL,BWP} + 1)/2) \rceil , N_{RBG} \right) + 1$$

bits if both resource allocation type 0 and 1 are configured.

    - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.

    - For resource allocation type 0, the $N_{RBG}$ LSBs provide the resource allocation as defined in Subclause 6.1.2.2.1 of [6, TS 38.214].

    - For resource allocation type 1, the $\lceil log_2( N_{RB}^{UL,BWP}(N_{RB}^{UL,BWP} + 1)/2) \rceil$ LSBs provide the resource allocation as follows:

        - For PUSCH hopping with resource allocation type 1:

            - $N_{UL\_hop}$ MSB bits are used to indicate the frequency offset according to Subclause 6.3 of [6, TS 38.214], where $N_{UL\_hop} = 1$ if the higher layer parameter *frequencyHoppingOffsetLists* contains two offset values and $N_{UL\_hop} = 2$ if the higher layer parameter *frequencyHoppingOffsetLists* contains four offset values

EP 4 440 222 A1

(continued)

$$- \left\lceil log_2( N_{RB}^{UL,BWP} (N_{RB}^{UL,BWP} + 1)/2) \right\rceil - N_{UL\_hop}$$ bits provides the frequency domain resource allocation according to Subclause 6.1.2.2 of [6, TS 38.214]

- For non-PUSCH hopping with resource allocation type 1:

$$- \left\lceil log_2( N_{RB}^{UL,BWP} (N_{RB}^{UL,BWP} + 1)/2) \right\rceil$$ bits provides the frequency domain resource allocation according to Subclause 6.1.2.2 of [6, TS 38.214]

If "Bandwidth part indicator" field indicates a bandwidth part other than the active bandwidth part and if both resource allocation type 0 and 1 are configured for the indicated bandwidth

part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment - 0, 1, 2, 3, or 4 bits as defined in Subclause 6.1.2.1 of [6, TS38.214]. The bitwidth for this field is determined as $\left\lceil log_2( I) \right\rceil$ bits, where $I$ is the number of entries in the higher layer parameter *pusch-TimeDomainAllocationList* if the higher layer parameter is configured; otherwise $I$ is the number of entries in the default table.
- Frequency hopping flag - 0 or 1 bit:

    - 0 bit if only resource allocation type 0 is configured or if the higher layer parameter *frequencyHopping* is not configured;

    - 1 bit according to Table 7.3.1.1.1-3 otherwise, only applicable to resource allocation type 1, as defined in Subclause 6.3 of [6, TS 38.214].

- Modulation and coding scheme - 5 bits as defined in Subclause 6.1.4.1 of [6, TS 38.214]
- New data indicator - 1 bit
- Redundancy version - 2 bits as defined in Table 7.3.1.1.1-2
- HARQ process number - 4 bits
- 1st downlink assignment index - 1 or 2 bits:

    - 1 bit for semi-static HARQ-ACK codebook;

    - 2 bits for dynamic HARQ-ACK codebook.

- 2nd downlink assignment inde - 0 or 2 bits:

    - 2 bits for dynamic HARQ-ACK codebook with two HARQ-ACK sub-codebooks;

    - 0 bit otherwise.

- TPC command for scheduled - 2 bits as defined in Subclause 7.1.1 of [5, TS38.213]

- SRS resource indicator - $\left\lceil log_2\left(\sum_{k=1}^{min\{L_{max},N_{SRS}\}\Sigma}\binom{N_{\mathrm{SRS}}}{k}\right)\right\rceil$ or $\lceil log_2(N_{\mathrm{SRS}})\rceil$ bits, where $N_{\mathrm{SRS}}$ is the number of configured SRS resources in the SRS resource set associated with the higher layer parameter *usage* of value 'codeBook' or 'nonCodeBook',

- $\left\lceil log_2\left(\sum_{k=1}^{min\{L_{max},N_{SRS}\}\Sigma}\binom{N_{\mathrm{SRS}}}{k}\right)\right\rceil$ bits according to Tables 7.3.1.1.2-28/29/30/31 if the higher layer parameter *txConfig = nonCodebook*, where $N_{\mathrm{SRS}}$ is the number of configured SRS resources in the SRS resource set associated with the higher layer parameter *usage* of value 'nonCodeBook' and

- if UE supports operation with *maxMIMO-Layers* and the higher layer parameter *maxMIMO-Layers* of *PUSCH-ServingCellConfig* of the serving cell is configured, $L_{max}$ is given by that parameter

- otherwise, $L_{max}$ is given by the maximum number of layers for PUSCH supported by the UE for the serving cell for non-codebook based operation.

---

- $\lceil log_2(N_{\mathrm{SRS}})\rceil$ bits according to Tables 7.3.1.1.2-32 if the higher layer parameter *txConfig = codebook*, where $N_{\mathrm{SRS}}$ is the number of configured SRS resources in the SRS resource set associated with the higher layer parameter *usage* of value 'codeBook'.

- Precoding information and number of layers - number of bits determined by the following:

- 0 bits if the higher layer parameter *txConfig = nonCodeBook*;

- 0 bits for 1 antenna port and if the higher layer parameter *txConfig = codebook;*

- 4, 5, or 6 bits according to Table 7.3.1.1.2-2 for 4 antenna ports, if *txConfig = codebook,* and according to whether transform precoder is enabled or disabled, and the values of higher layer parameters *maxRank*, and *codebookSubset;*

- 2, 4, or 5 bits according to Table 7.3.1.1.2-3 for 4 antenna ports, if *txConfig = codebook,* and according to whether transform precoder is enabled or disabled, and the values of higher layer parameters *maxrank*, and *codebookSubset;*

- 2 or 4 bits according to Table 7.3.1.1.2-4 for 2 antenna ports, if *txConfig = codebook,* and according to whether transform precoder is enabled or disabled, and the values of higher layer parameters *maxRank* and *codebookSubset;*

- 1 or 3 bits according to Table 7.3.1.1.2-5 for 2 antenna ports, if *txConfig = codebook,* and according to whether transform precoder is enabled or disabled, and the values of higher layer parameters *maxRank* and *codebookSubset.*

- Antenna ports - number of bits determined by the following

- 2 bits as defined by Tables 7.3.1.1.2-6, if transform precoder is enabled, *dmrs-Type*=1, and *maxLength*=1;

EP 4 440 222 A1

(continued)

- 4 bits as defined by Tables 7.3.1.1.2-7, if transform precoder is enabled, *dmrs-Type*=1, and *maxLength*=2;

- 3 bits as defined by Tables 7.3.1.1.2-8/9/10/11, if transform precoder is disabled, *dmrs-Type*=1, and *maxLength*=1, and the value of rank is determined according to the SRS resource indicator field if the higher layer parameter *txConfig* = *nonCodebook* and according to the Precoding information and number of layers field if the higher layer parameter *txConfig* = *codebook;*

- 4 bits as defined by Tables 7.3.1.1.2-12/13/14/15, if transform precoder is disabled, *dmrs-Type*=1, and *maxLength*=2, and the value of rank is determined according to the SRS resource indicator field if the higher layer parameter *txConfig* = *nonCodebook* and according to the Precoding information and number of layers field if the higher layer parameter *txConfig* = *codebook;*

- 4 bits as defined by Tables 7.3.1.1.2-16/17/18/19, if transform precoder is disabled, *dmrs-Type*=2, and *maxLength*=1, and the value of rank is determined according to the SRS resource indicator field if the higher layer parameter *txConfig* = *nonCodebook* and according to the Precoding

information and number of layers field if the higher layer parameter *txConfig* = *codebook;*

- 5 bits as defined by Tables 7.3.1.1.2-20/21/22/23, if transform precoder is disabled, *dmrs-Type*=2, and *maxLength*=2, and the value of rank is determined according to the SRS resource indicator field if the higher layer parameter *txConfig* = *nonCodebook* and according to the Precoding information and number of layers field if the higher layer parameter *txConfig* = *codebook.*

where the number of CDM groups without data of values 1, 2, and 3 in Tables 7.3.1.1.2-6 to 7.3.1.1.2-23 refers to CDM groups {0}, {0,1}, and {0, 1,2} respectively.

If a UE is configured with both *dmrs-UplinkForPUSCH-MappingTypeA* and *dmrs-UplinkForPUSCH-MappingTypeB*, the bitwidth of this field equals $max\{x_A, x_B\}$, where $x_A$ is the "Antenna ports" bitwidth derived according to *dmrs-UplinkForPUSCH-MappingTypeA* and $x_B$ is the "Antenna ports" bitwidth derived according to *dmrs-UplinkForPUSCH-MappingTypeB*. A number of $|x_A - x_B|$ zeros are padded in the MSB of this field, if the mapping type of the PUSCH corresponds to the smaller value of $x_A$ and $x_B$.

- SRS request - 2 bits as defined by Table 7.3.1.1.2-24 for UEs not configured with *supplementary Uplink* in *ServingCellConfig* in the cell; 3 bits for UEs configured with *supplementary Uplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].

- CSI request - 0, 1, 2, 3, 4, 5, or 6 bits determined by higher layer parameter *reportTriggerSize.*

- CBG transmission information (CBGTI) - 0 bit if higher layer parameter *codeBlockGroupTransmission* for PDSCH is not configured, otherwise, 2, 4, 6, or 8 bits determined by higher layer parameter *maxCodeBlockGroupsPerTransportBlock* for PUSCH.

- PTRS-DMRS association - number of bits determined as follows

(continued)

| |
|---|
| - 0 bit if *PTRS-UplinkConfig* is not configured and transform precoder is disabled, or if transform precoder is enabled, or if *maxRank*=1;<br><br>- 2 bits otherwise, where Table 7.3.1.1.2-25 and 7.3.1.1.2-26 are used to indicate the association between PTRS port(s) and DMRS port(s) for transmission of one PT-RS port and two PT-RS ports respectively, and the DMRS ports are indicated by the Antenna ports field.<br><br>If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part. |
| - beta_offset indicator - 0 if the higher layer parameter *betaOffsets* = *semiStatic*; otherwise 2 bits as defined by Table 9.3-3 in [5, TS 38.213].<br>- DMRS sequence initialization - 0 bit if transform precoder is enabled; 1 bit if transform precoder is disabled.<br>- UL-SCH indicator - 1 bit. A value of "1" indicates UL-SCH shall be transmitted on the PUSCH and a value of "0" indicates UL-SCH shall not be transmitted on the PUSCH. Except for DCI format 0_1 with CRC scrambled by SP-CSI-RNTI, a UE is not expected to receive a DCI format 0_1 with UL-SCH indicator of "0" and CSI request of all zero(s). |

DCI format 1_0 may be used as fallback DCI for scheduling a PDSCH, and in this case, a CRC may be scrambled by a C-RNTI. The DCI format 1_0, in which the CRC is scrambled by the C-RNTI, may include, for example, the following information.

[Table 6]

| |
|---|
| - Identifier for DCI formats - 1 bits<br><br>                    - The value of this bit field is always set to 1, indicating a DL DCI format<br><br>- Frequency domain resource assignment - $\left\lceil log_2( N_{\mathrm{RB}}^{\mathrm{DL,BWP}}(N_{\mathrm{RB}}^{\mathrm{DL,BWP}} + 1)/\ 2)\right\rceil$ bits where $N_{\mathrm{RB}}^{\mathrm{DL,BWP}}$ is given by subclause 7.3.1.0<br><br>If the CRC of the DCI format 1_0 is scrambled by C-RNTI and the "Frequency domain resource assignment" field are of all ones, the DCI format 1_0 is for random access procedure initiated by a PDCCH order, with all remaining fields set as follows:<br>- Random Access Preamble index - 6 bits according to *ra-PreambleIndex* in Subclause 5.1.2 of [8, TS38.321]<br>- UL/SUL indicator - 1 bit. If the value of the "Random Access Preamble index" is not all zeros and if the UE is configured with *supplementary Uplink* in *ServingCellConfig* in the cell, this field indicates which UL carrier in the cell to transmit the PRACH according to Table 7.3.1.1.1-1; otherwise, this field is reserved<br>- SS/PBCH index - 6 bits. If the value of the "Random Access Preamble index" is not all zeros, this field indicates the SS/PBCH that shall be used to determine the RACH occasion for the PRACH transmission; otherwise, this field is reserved.<br>- PRACH Mask index - 4 bits. If the value of the "Random Access Preamble index" is not all zeros, this field indicates the RACH occasion associated with the SS/PBCH indicated by "SS/PBCH index" for the PRACH transmission, according to Subclause 5.1.1 of [8, TS38.321]; otherwise, this field is reserved<br>- Reserved bits - 10 bits<br>Otherwise, all remaining fields are set as follows:<br>- Time domain resource assignment - 4 bits as defined in Subclause 5.1.2.1 of [6, TS 38.214]<br>- VRB-to-PRB mapping - 1 bit according to Table 7.3.1.2.2-5<br>- Modulation and coding schem - 5 bits as defined in Subclause 5.1.3 of [6, TS 38.214]<br>- New data indicator - 1 bit<br>- Redundancy version - 2 bits as defined in Table 7.3.1.1.1-2 |
|   |
| - HARQ process number - 4 bits<br>- Downlink assignment index - 2 bits as defined in Subclause 9.1.3 of [5, TS 38.213], as counter DAI<br>- TPC command for scheduled PUCCH - 2 bits as defined in Subclause 7.2.1 of [5, TS 38.213]<br>- PUCCH resource indicator - 3 bits as defined in Subclause 9.2.3 of [5, TS 38.213]<br>- PDSCH-to-HARQ_feedback timing indicator - 3 bits as defined in Subclause 9.2.3 of [5, TS38.213] |

DCI format 1_1 may be used as non-fallback DCI for scheduling a PDSCH, and in this case, a CRC may be scrambled by a C-RNTI. The DCI format 1_1, in which the CRC is scrambled by the C-RNTI, may include, for example, the following information.

[Table 7]

- Identifier for DCI format - 1 bits

- The value of this bit field is always set to 1, indicating a DL DCI format

- Carrier indicator - 0 or 3 bits as defined in Subclause 10.1 of [5, TS 38.213].

- Bandwidth part indicator - 0, 1 or 2 bits as determined by the number of DL BWPs $n_{\text{BWP,RRC}}$ configured by higher layers, excluding the initial DL bandwidth part. The bitwidth for this field is determined as $\lceil log_2(n_{\text{BWP}}) \rceil$ bits, where

- $n_{\text{BWP}} = n_{\text{BWP,RRC}} + 1$ if $n_{\text{BWP,RRC}} \leq 3$, in which case the bandwidth part indicator is equivalent to the ascending order of the higher layer parameter *BWP-Id*;

- otherwise $n_{\text{BWP}} = n_{\text{BWP,RRC}}$, in which case the bandwidth part indicator is defined in Table 7.3.1.1.2-1;

If a UE does not support active BWP change via DCI, the UE ignores this bit field.

- Frequency domain resource assignment - number of bits determined by the following, where $N_{\text{RB}}^{\text{DL,BWP}}$ is the size of the active DL bandwidth part:

- $N_{\text{RBG}}$ bits if only resource allocation type 0 is configured, where $N_{\text{RBG}}$ is defined in Subclause 5.1.2.2.1 of [6, TS38.214],

- $\left\lceil log_2( N_{\text{RB}}^{\text{DL,BWP}}(N_{\text{RB}}^{\text{DL,BWP}} + 1)/2) \right\rceil$ bits if only resource allocation type 1 is configured, or

- $max\left( \left\lceil log_2( N_{\text{RB}}^{\text{DL,BWP}}(N_{\text{RB}}^{\text{DL,BWP}} + 1)/2) \right\rceil , N_{\text{RBG}}\right) + 1$ bits if both resource allocation type 0 and 1 are configured.

- If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.

- For resource allocation type 0, the $N_{\text{RBG}}$ LSBs provide the resource allocation as defined in Subclause 5.1.2.2.1 of [6, TS 38.214].

- For resource allocation type 1, the $\left\lceil log_2( N_{\text{RB}}^{\text{DL,BWP}}(N_{\text{RB}}^{\text{DL,BWP}} + 1)/2) \right\rceil$ LSBs provide the resource allocation as defined in Subclause 5.1.2.2.2 of [6, TS 38.214]

If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

| |
|---|
| - Time domain resource assignment - 0, 1, 2, 3, or 4 bits as defined in Subclause 5.1.2.1 of [6, TS 38.214]. The bitwidth for this field is determined as $\lceil log_2(I) \rceil$ bits, where *I* is the number of entries in the higher layer parameter *pdsch-TimeDomainAllocationList* if the higher layer parameter is configured; otherwise *I* is the |
| |
| number of entries in the default table.<br>- VRB-to-PRB mapping - 0 or 1 bit:<br>    - 0 bit if only resource allocation type 0 is configured or if interleaved VRB-to-PRB mapping is not configured by high layers;<br>    - 1 bit according to Table 7.3.1.2.2-5 otherwise, only applicable to resource allocation type 1, as defined in Subclause 7.3.1.6 of [4, TS 38.211].<br>- PRB bundling size indicator - 0 bit if the higher layer parameter *prb-BundlingType* is not configured or is set to 'static', or 1 bit if the higher layer parameter *prb-BundlingType* is set to 'dynamic' according to Subclause 5.1.2.3 of [6, TS 38.214].<br>- Rate matching indicator - 0, 1, or 2 bits according to higher layer parameters *rateMatchPatternGroup1* and *rateMatchPatternGroup2*, where the MSB is used to indicate *rateMatchPatternGroup1* and the LSB is used to indicate *rateMatchPatternGroup2* when there are two groups.<br>- ZP CSI-RS trigger - 0, 1, or 2 bits as defined in Subclause 5.1.4.2 of [6, TS 38.214]. The bitwidth for this field is determined as $\lceil log_2(n_{ZP}+1) \rceil$ bits, where $n_{ZP}$ is the number of aperiodic ZP CSI-RS resource sets configured by higher layer.<br>For transport block:<br>    - Modulation and coding scheme (변조 및 코딩 스킴) - 5 bits as defined in Subclause 5.1.3.1 of [6, TS 38.214]<br>    - New data indicator (새로운 데이터 지시자) - 1 bit<br>    - Redundancy version (리던던시 버전) - 2 bits as defined in Table 7.3.1.1.1-2<br>For transport block 2 (only present if *maxNrofCodeWordsScheduledByDCI* equals 2):<br>    - Modulation and coding scheme - 5 bits as defined in Subclause 5.1.3.1 of [6, TS 38.214]<br>    - New data indicator - 1 bit<br>    - Redundancy version - 2 bits as defined in Table 7.3.1.1.1-2<br>If "Bandwidth part indicator" field indicates a bandwidth part other than the active bandwidth part and the value of *maxNrofCodeWordsScheduledByDCI* for the indicated bandwidth part equals 2 and the value of *maxNrofCodeWordsScheduledByDCI* for the active bandwidth part equals 1, the UE assumes zeros are padded when interpreting the "Modulation and coding scheme", "New data indicator", and "Redundancy version" fields |

EP 4 440 222 A1

18

(continued)

EP 4 440 222 A1

of transport block 2 according to Subclause 12 of [5, TS38.213], and the UE ignores the "Modulation and coding scheme", "New data indicator", and "Redundancy version" fields of transport block 2 for the indicated bandwidth part.

- HARQ process number - 4 bits
- Downlink assignment index - number of bits as defined in the following

  - 4 bits if more than one serving cell are configured in the DL and the higher layer parameter *pdsch-HARQ-ACK-Codebook=dynamic,* where the 2 MSB bits are the counter DAI and the 2 LSB bits are the total DAI;
  - 2 bits if only one serving cell is configured in the DL and the higher layer parameter *pdsch-HARQ-ACK-Codebook = dynamic*, where the 2 bits are the counter DAI;
  - 0 bits otherwise.

- TPC command for scheduled PUCCH - 2 bits as defined in Subclause 7.2.1 of [5, TS 38.213]
- PUCCH resource indicator - 3 bits as defined in Subclause 9.2.3 of [5, TS 38.213]
- PDSCH-to-HARQ_feedback timing indicator - 0, 1, 2, or 3 bits as defined in Subclause 9.2.3 of [5, TS 38.213]. The bitwidth for this field is determined as

$\lceil log_2(I) \rceil$ bits, where *I* is the number of entries in the higher layer parameter *dl-DataToUL-ACK*.

- Antenna port(s) - 4, 5, or 6 bits as defined by Tables 7.3.1.2.2-1/2/3/4, where the number of CDM groups without data of values 1, 2, and 3 refers to CDM groups {0}, {0,1}, and {0, 1,2} respectively. The antenna ports $\{p_0,...,p_{\upsilon-1}\}$ shall be determined according to the ordering of DMRS port(s) given by Tables 7.3.1.2.2-1/2/3/4.

  If a UE is configured with both *dmrs-DownlinkForPDSCH-MappingTypeA* and *dmrs-DownlinkForPDSCH-MappingTypeB*, the bitwidth of this field equals $max\{x_A, x_B\}$, where $x_A$ is the "Antenna ports" bitwidth derived according to *dmrs-DownlinkForPDSCH-MappingTypeA* and $x_B$ is the "Antenna ports" bitwidth derived according to *dmrs-DownlinkForPDSCH-MappingTypeB*. A number of $|x_A - x_B|$ zeros are padded in the MSB of this field, if the mapping type of the PDSCH corresponds to the smaller value of $x_A$ and $x_B$.

- Transmission configuration indication - 0 bit if higher layer parameter *tci-PresentInDCI* is not enabled; otherwise 3 bits as defined in Subclause 5.1.5 of [6, TS38.214].

  If "Bandwidth part indicator" field indicates a bandwidth part other than the active bandwidth part,
  - if the higher layer parameter *tci-PresentInDCI* is not enabled for the CORESET used for the PDCCH carrying the DCI format 1_1,
    - the UE assumes *tci-PresentInDCI* is not enabled for all CORESETs in the indicated

bandwidth part;
  - otherwise,
    - the UE assumes *tci-PresentInDCI* is enabled for all CORESETs in the indicated bandwidth part.

(continued)

| |
|---|
| - SRS request - 2 bits as defined by Table 7.3.1.1.2-24 for UEs not configured with *supplementary Uplink* in *ServingCellConfig* in the cell; 3 bits for UEs configured with *supplementary Uplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].<br><br>- CBG transmission information (CBGTI) - 0 bit if higher layer parameter *codeBlockGroupTransmission* for PDSCH is not configured, otherwise, 2, 4, 6, or 8 bits as defined in Subclause 5.1.7 of [6, TS38.214], determined by the higher layer parameters *maxCodeBlockGroupsPerTransportBlock* and *maxNrofCodeWordsScheduledByDCI* for the PDSCH.<br><br>- CBG flushing out information (CBGFI) - 1 bit if higher layer parameter *codeBlockGroupFlushIndicator* is configured as "TRUE", 0 bit otherwise.<br><br>- DMRS sequence initialization - 1 bit. |

In the following, a time domain resource allocation method for a data channel in the 5G wireless communication system will be described.

The base station may configure a table for time domain resource allocation information regarding a downlink data channel (physical downlink shared channel; PDSCH) and an uplink data channel (physical uplink shared channel; PUSCH) for the UE through higher layer signaling (for example, RRC signaling). For a PDSCH, a table including up to maxNrofDL-Allocations=16 entries may be configured, and for a PUSCH, a table including up to maxNrofUL-Allocations=16 entries may be configured. The time domain resource allocation information may include, for example, PDCCH-to-PDSCH slot timing (corresponding to a time interval in the unit of a slot between a time point when a PDCCH is received and a time point when a PDSCH scheduled by the received PDCCH is transmitted, and denoted as K0) or PDCCH-to-PUSCH slot timing (corresponding to a time interval in the unit of a slot between a time point when a PDCCH is received and a time point when a PUSCH scheduled by the received PDCCH is transmitted, denoted as K2), information on a position and the length of a start symbol for which a PDSCH or PUSCH is scheduled within a slot, a mapping type of the PDSCH or PUSCH, and the like. For example, information such as [Table 8] and [Table 9] below may be notified from the base station to the UE.

[Table 8]

| *PDSCH-TimeDomainResourceAllocationList* information element |
| --- |
| PDSCH-TimeDomainResourceAllocationList ::=  SEQUENCE (SIZE(1..maxNrofDL-Allocations)) OF PDSCH-TimeDomainResourceAllocation <br><br> PDSCH-TimeDomainResourceAllocation ::=  SEQUENCE { <br>   k0                                                    INTEGER(0..32) OPTIONAL,    -- Need S <br>   mappingType                             ENUMERATED {typeA, typeB}, <br>   startSymbolAndLength                 INTEGER (0..127) <br> } |

[Table 9]

---

***PUSCH-TimeDomainResourceAllocation* information element**

PUSCH-TimeDomainResourceAllocationList ::=   SEQUENCE
(SIZE(1..maxNrofUL-Allocations)) OF PUSCH-TimeDomainResourceAllocation

PUSCH-TimeDomainResourceAllocation ::=   SEQUENCE {
    k2                                         INTEGER(0..32)
OPTIONAL,      -- Need S
        mappingType                            ENUMERATED {typeA,
typeB},
        startSymbolAndLength                   INTEGER (0..127)
}

---

The base station may notify the UE of one of the entries in the table for the time domain resource allocation information through L1 signaling (for example, DCI) (for example, which may be indicated as a "time domain resource allocation" field in DCI). The UE may obtain the time domain resource allocation information for the PDSCH or PUSCH, based on the DCI received from the base station.

In the following, a frequency domain resource allocation method for a data channel in the 5G wireless communication system will be described.

In the 5G wireless communication system, two types, resource allocation type 0 and resource allocation type 1, are supported as a method for indicating frequency domain resource allocation information for a downlink data channel (physical downlink shared channel; PDSCH) and an uplink data channel (physical uplink shared channel; PUSCH).

Resource allocation type 0

- RB allocation information may be notified from the base station to the UE in the form of a bitmap for a resource block group (RBG). In this case, the RBG may be configured by a set of consecutive virtual RBs (VRBs), and size P of the RBG may be determined based on a value configured as a higher layer parameter (*rbg-Size*) and a size value of a bandwidth part defined in the table below.

[Table 10] Nominal RBG size *P* [119]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

- The total number of RBGs ($N_{RBG}$) of bandwidth part i having a size of $N_{BWP,i}^{size}$ may be defined as follows.

■

$$N_{RBG} = \left\lceil \left( N_{BWP,i}^{size} + \left( N_{BWP,i}^{start} \bmod P \right) \right) / P \right\rceil,$$

where

♦ the size of the first RBG is $RBG_0^{size} = P - N_{BWP,i}^{start} \bmod P$,

♦ the size of last RBG is $RBG_{last}^{size} = \left(N_{BWP,i}^{start} + N_{BWP,i}^{size}\right) \bmod P$ if $\left(N_{BWP,i}^{start} + N_{BWP,i}^{size}\right) \bmod P > 0$ and $P$ otherwise,

♦ the size of all other RBGs is $P$.

- Each bit of a bitmap having a bit size of $N_{RBG}$ may correspond to each RBG. RBGs may be assigned indexes in order of increasing a frequency, starting from the lowest frequency position of a bandwidth part. For $N_{RBG}$ RBGs in the bandwidth part, RBG#($N_{RBG}$-1) from RBG#0 may be mapped to bits in a sequence from an MSB to an LSB in an RBG bitmap. If a specific bit value in the bitmap is 1, the UE may determine that an RBG corresponding to the corresponding bit value has been allocated, and if a specific bit value in the bitmap is 0, the UE may determine that an RBG corresponding to the corresponding bit value has not been allocated.

Resource allocation type 1

- RB allocation information may be notified from the base station to the UE as information on a start position and the length of consecutively allocated VRBs. In this case, interleaving or non-interleaving may be additionally applied to the consecutively allocated VRBs. A resource allocation field of resource allocation type 1 may be configured by a resource indication value (RIV), and an RIV may be configured by a start point ($RB_{start}$) of a VRB and a length ($L_{RBS}$) of consecutively allocated RBs. More specifically, an RIV in a bandwidth part having a size of $N_{BWP}^{size}$ may be defined as follows.

■ if $(L_{RBs} - 1) \leq \left\lfloor N_{BWP}^{size}/2 \right\rfloor$ then

◆ $RIV = N_{BWP}^{size}(L_{RBs} - 1) + RB_{start}$

■ else

◆ $RIV = N_{BWP}^{size}(N_{BWP}^{size} - L_{RBs} + 1) + (N_{BWP}^{size} - 1 - RB_{start})$

■ where $L_{RBs} \geq 1$ and shall not exceed $N_{BWP}^{size} - RB_{start}$.

The base station may configure a resource allocation type for the UE through higher layer signaling (for example, a higher layer parameter, resourceAllocation, may be configured to have one value among resourceAllocationType0, resourceAllocationType1, or dynamic Switch.). If the UE has received a configuration of both resource allocation types 0 and 1 (or equally, a higher layer parameter, resourceAllocation, has been configured to be dynamicSwitch), the base station may indicate whether a bit corresponding to a most significant bit (MSB) of a field indicating resource allocation in a DCI format indicating scheduling corresponds to resource allocation type 0 or resource allocation type 1. In addition, resource allocation information may be indicated through the remaining bits excluding the bit corresponding to the MSB based on the indicated resource allocation type, and the UE may interpret resource allocation field information of a DCI field, based on the resource allocation information. If the UE has received a configuration of one of resource allocation type 0 or resource allocation type 1 (or equally, if a higher layer parameter, resourceAllocation, has been configured to have one value among resourceAllocationType0 or resourceAllocationType1), resource allocation information may be indicated based on a resource allocation type in which a field indicating resource allocation in a DCI format indicating scheduling is configured, and the UE may interpret resource allocation field information of a DCI field, based on the resource allocation information.

In the following, a modulation and coding scheme (MCS) used in the 5G wireless communication system will be described in detail.

In 5G, multiple MCS index tables are defined for PDSCH and PUSCH scheduling. An MCS table to be assumed by the UE among multiple MCS tables may be configured or indicated from the base station to the UE through higher layer signaling, L1 signaling, or an RNTI value that the UE assumes when decoding a PDCCH.

MCS index table 1 for a PDSCH and a CP-OFDM-based PUSCH (or PUSCH without transform precoding) may be as shown in Table 11 below.

[Table 11]: MCS index table 1 for PDSCH

| MCS Index $I_{MCS}$ | Modulation Order $Q_m$ | Target code Rate $R$ x [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

MCS index table 2 for a PDSCH and a CP-OFDM-based PUSCH (or PUSCH without transform precoding) may be as shown in Table 12 below.

[Table 12]: MCS index table 2 for PDSCH

| MCS Index $I_{MCS}$ | Modulation Order $Q_m$ | Target code Rate $R \times$ [1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | reserved | |
| 29 | 4 | reserved | |
| 30 | 6 | reserved | |
| 31 | 8 | reserved | |

MCS index table 3 for a PDSCH and a CP-OFDM-based PUSCH (or PUSCH without transform precoding) may be as shown in Table 13 below.

[Table 13]: MCS index table 3 for PDSCH

| MCS Index $I_{MCS}$ | Modulation Order $Q_m$ | Target code Rate $R$ x [1024] | Spectral efficiency |
|---|---|---|---|
| 0 | 2 | 30 | 0.0586 |

(continued)

| MCS Index $I_{MCS}$ | Modulation Order $Q_m$ | Target code Rate $R$ x [1024] | Spectral efficiency |
|---|---|---|---|
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | reserved | |
| 30 | 4 | reserved | |
| 31 | 6 | reserved | |

MCS index table 1 for a DFT-s-OFDM-based PUSCH (or PUSCH with transform precoding) may be as shown in Table 14 below.

[Table 14]: MCS index table for PUSCH with transform precoding and 64QAM

| MCS Index $I_{MCS}$ | Modulation Order $Q_m$ | Target code Rate $R$ x 1024 | Spectral efficiency |
|---|---|---|---|
| 0 | q | 240/ q | 0.2344 |
| 1 | q | 314/ q | 0.3066 |

(continued)

| MCS Index $I_{MCS}$ | Modulation Order $Q_m$ | Target code Rate $R$ x 1024 | Spectral efficiency |
|---|---|---|---|
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | reserved | |
| 29 | 2 | reserved | |
| 30 | 4 | reserved | |
| 31 | 6 | reserved | |

MCS index table 2 for a DFT-s-OFDM-based PUSCH (or PUSCH with transform precoding) may be as shown in Table 15 below.

[Table 15]: MCS index table 2 for PUSCH with transform precoding and 64QAM

| MCS Index $I_{MCS}$ | Modulation Order $Q_m$ | Target code Rate $R$ x 1024 | Spectral efficiency |
|---|---|---|---|
| 0 | q | 60/q | 0.0586 |
| 1 | q | 80/q | 0.0781 |
| 2 | q | 100/q | 0.0977 |

(continued)

| MCS Index $I_{MCS}$ | Modulation Order $Q_m$ | Target code Rate R x 1024 | Spectral efficiency |
|---|---|---|---|
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | reserved | |
| 29 | 2 | reserved | |
| 30 | 4 | reserved | |
| 31 | 6 | reserved | |

An MCS index table for a PUSCH to which transform precoding (transform precoding or discrete Fourier transform (DFT) precoding) and 64 QAM are applied may be as shown in [Table 16] below.

[Table 16]

| MCS Index $I_{MCS}$ | Modulation Order $Q_m$ | Target code Rate R x 1024 | Spectral efficiency |
|---|---|---|---|
| 0 | q | 240/ q | 0.2344 |
| 1 | q | 314/ q | 0.3066 |
| 2 | 2 | 193 | 0.3770 |
| 3 | 2 | 251 | 0.4902 |

(continued)

| MCS Index $I_{MCS}$ | Modulation Order $Q_m$ | Target code Rate R x 1024 | Spectral efficiency |
|---|---|---|---|
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | reserved | |
| 29 | 2 | reserved | |
| 30 | 4 | reserved | |
| 31 | 6 | reserved | |

An MCS index table for a PUSCH to which transform precoding (transform precoding or discrete Fourier transform (DFT) precoding) and 64 QAM are applied may be as shown in [Table 17] below.

[Table 17]

| MCS Index $I_{MCS}$ | Modulation Order $Q_m$ | Target code Rate R x 1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |

(continued)

| MCS Index $I_{MCS}$ | Modulation Order $Q_m$ | Target code Rate R x 1024 | Spectral efficiency |
|---|---|---|---|
| 5 | 4 | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | reserved | |
| 29 | 2 | reserved | |
| 30 | 4 | reserved | |
| 31 | 6 | reserved | |

In the following, a downlink control channel in the 5G wireless communication system will be described in more detail with reference to the drawings.

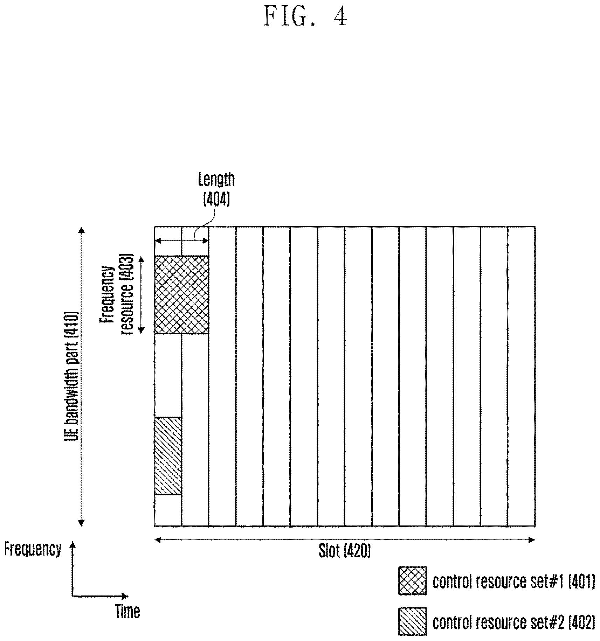

FIG. 4 illustrates an example of a control resource set (CORESET) through which a downlink control channel is transmitted in a 5G wireless communication system.

Referring to FIG. 4, two control resource sets (control resource set #1 401 and control resource set #2 402) may be configured within a UE bandwidth part 410 on the frequency axis and within 1 slot 420 on the time axis. The control resource sets 401 and 402 may be configured to a specific frequency resource 403 within the entire UE bandwidth part 410 on the frequency axis. In addition, the control resource sets 401 and 402 may be configured to one or multiple OFDM symbols on the time axis, and may be defined to have a control resource set length (control resource set duration) 404. Referring to the example shown in FIG. 4, the control resource set #1 401 is configured to have a control resource set length of 2 symbols, and the control resource set #2 402 is configured to have a control resource set length of 1 symbol.

The above-described control resource set in the 5G wireless communication system may be configured for the UE by the base station through higher layer signaling (for example, system information, master information block (MIB), and radio resource control (RRC) signaling). The configuring of the control resource set for the UE means providing information such as a control resource set identifier (identity), a frequency position of the control resource set, and a symbol length of the control resource set. For example, the following information may be included.

[Table 18]

```
ControlResourceSet ::=                    SEQUENCE {
    -- Corresponds to L1 parameter 'CORESET-ID'

    controlResourceSetId                  ControlResourceSetId,
    frequencyDomainResources              BIT STRING (SIZE (45)),
    duration                              INTEGER
        (1..maxCoReSetDuration),
    cce-REG-MappingType                           CHOICE {
        interleaved                       SEQUENCE {

            reg-BundleSize                ENUMERATED {n2, n3, n6},

            precoderGranularity           ENUMERATED
        {sameAsREG-bundle, allContiguousRBs},

            interleaverSize               ENUMERATED {n2, n3, n6}
```

```
            shiftIndex
            INTEGER(0..maxNrofPhysicalResourceBlocks-1)
                        OPTIONAL
        },
        nonInterleaved                    NULL
    },
    tci-StatesPDCCH                       SEQUENCE(SIZE
        (1..maxNrofTCI-StatesPDCCH)) OF TCI-StateId
        OPTIONAL,
    tci-PresentInDCI                      ENUMERATED {enabled}
                                          OPTIONAL,    --
    Need S
}
```

In [Table 18], tci-StatesPDCCH (simply named a transmission configuration indication (TCI) state) configuration information may include information of one or multiple synchronization signal (SS)/physical broadcast channel (PBCH) block indexes in a Quasi Co Located (QCL) relationship with a DMRS transmitted in a corresponding control resource set or a channel state information reference signal (CSI-RS) index.

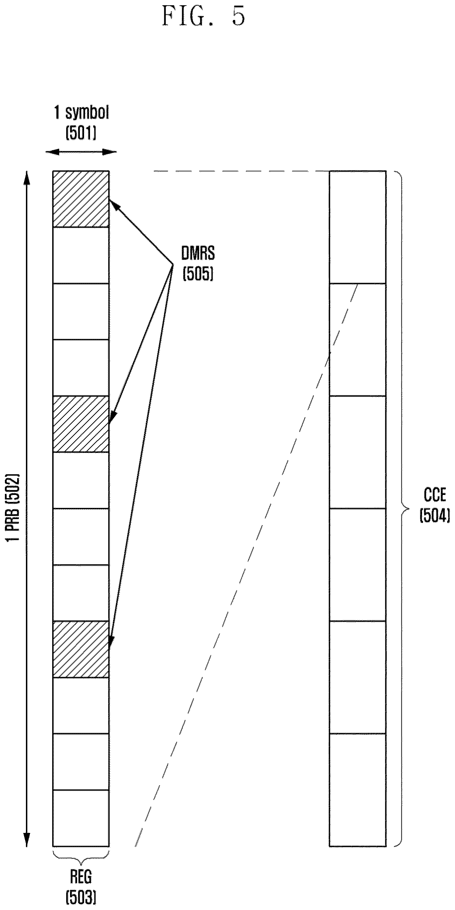

FIG. 5 illustrates a structure of a downlink control channel in a 5G wireless communication system.

That is, FIG. 5 illustrates an example of basic units of time and frequency resources which constitute a downlink control channel which can be used in the 5G wireless communication system.

Referring to FIG. 5, basic units of time and frequency resources which constitute a control channel may be referred to as a resource element group (REG) 503, and the REG 503 may be defined by 1 OFDM symbol 501 on the time axis and 1 physical resource block (PRB) 502 on the frequency axis, that is, 12 subcarriers. The base station may configure a downlink control channel allocation unit by concatenating REGs 503.

As shown in FIG. 5, when a basic unit to which a downlink control channel is allocated in the 5G wireless communication system is referred to as a control channel element (CCE) 504, 1 CCE 504 may be configured by multiple REGs 503. Taking an REG 503 shown in FIG. 5 as an example, the REG 503 may be configured by 12 REs, and if 1 CCE 504 is configured by 6 REGs 503, the 1 CCE 504 may be configured by 72 REs. If a downlink control resource set is configured, a corresponding area may be configured by multiple CCEs 504, and a specific downlink control channel may be mapped to one or multiple CCEs 504 according to an aggregation level (AL) within the control resource set and transmitted. The CCEs 504 within the control resource set are classified by numbers, and in this case, the numbers of CCEs 504 may be assigned according to a logical mapping manner.

The basic unit of the downlink control channel shown in FIG. 5, that is, the REG 503, may include both REs to which DCI is mapped and an area to which a DMRS 505, which is a reference signal for decoding the REs, is mapped. As shown in FIG. 5, three DMRSs 505 may be transmitted within 1 REG 503. The number of CCEs required to transmit a PDCCH may be 1, 2, 4, 8, or 16 depending on the aggregation level (AL), and different numbers of CCEs may be used to implement link adaptation of the downlink control channel. For example, in the case of AL=L, one downlink control channel may be transmitted through L number of CCEs. The UE is required to detect a signal without knowing information on the downlink control channel, and a search space indicating a set of CCEs is defined for blind decoding. The search space is a set of downlink control channel candidates configured by CCEs that the UE is required to attempt to decode on a given aggregation level, and there are various aggregation levels which make one bundle of 1, 2, 4, 8, or 16 CCEs, and thus the UE may have multiple search spaces. A search space set may be defined as a set of search spaces at all configured aggregation levels.

The search space may be classified into a common search space and a UE-specific search space. A predetermined group of UEs or all UEs may examine a common search space of a PDCCH to receive cell common control information such as a paging message or dynamic scheduling for system information. For example, PDSCH scheduling allocation information for transmission of an SIB, including cell operator information, etc., may be received by examining the common search space of the PDCCH. In the case of the common search space, a predetermined group of UEs or all UEs are required to receive the PDCCH, and thus the common search space may be defined as a predefined set of CCEs. Scheduling allocation information for a UE-specific PDSCH or PUSCH may be received by examining a UE-specific search space of the PDCCH. The UE-specific search space may be UE-specifically defined by a function of the UE's identity and various system parameters.

In the 5G wireless communication system, a parameter for the search space for the PDCCH may be configured for the UE from the base station through higher layer signaling (for example, SIB, MIB, and RRC signaling). For example, the base station may configure, for the UE, the number of PDCCH candidates at each aggregation level L, a monitoring period for a search space, a monitoring occasion in the unit of a symbol within a slot for a search space, a search space type (a common search space or a UE-specific search space), a combination of an RNTI and a DCI format to be monitored in a corresponding search space, a control resource set index for monitoring a search space, and the like. For example, the parameter for the search space for the PDCCH may include the following information.

[Table 19]

```
SearchSpace ::=                         SEQUENCE {
    -- Identity of the search space. SearchSpaceId = 0 identifies the
       SearchSpace configured via PBCH (MIB) or
       ServingCellConfigCommon.
    searchSpaceId                       SearchSpaceId,
    controlResourceSetId                ControlResourceSetId,
    monitoringSlotPeriodicityAndOffset  CHOICE {
        sl1                             NULL,
        sl2                             INTEGER (0..1),
        sl4                             INTEGER (0..3),
        sl5                             INTEGER (0..4),
        sl8                             INTEGER (0..7),
        sl10                            INTEGER (0..9),
        sl16                            INTEGER (0..15),
        sl20                            INTEGER (0..19)
    }
                                        OPTIONAL,
    duration                            INTEGER (2..2559)
    monitoringSymbolsWithinSlot         BIT STRING (SIZE (14))
                                        OPTIONAL,
    nrofCandidates                      SEQUENCE {
        aggregationLevel1               ENUMERATED {n0, n1, n2,
    n3, n4, n5, n6, n8},
```

```
            aggregationLevel2                ENUMERATED {n0, n1, n2,
            n3, n4, n5, n6, n8},
            aggregationLevel4                ENUMERATED {n0, n1, n2,
            n3, n4, n5, n6, n8},
```

```
            aggregationLevel8                ENUMERATED {n0, n1, n2,
            n3, n4, n5, n6, n8},
            aggregationLevel16               ENUMERATED {n0, n1, n2,
            n3, n4, n5, n6, n8}
        },

        searchSpaceType                      CHOICE {
        -- Configures this search space as common search space (CSS) and DCI
        formats to monitor.
        common                               SEQUENCE {
            }
        ue-Specific                          SEQUENCE {
            -- Indicates whether the UE monitors in this USS for DCI formats 0-0
        and 1-0 or for formats 0-1 and 1-1.
            formats                          ENUMERATED {formats0-0-
        And-1-0, formats0-1-And-1-1},
            ...
        }
```

The base station may configure one or multiple search space sets for the UE depending on configuration information. According to an embodiment, the base station may configure search space set 1 and search space set 2 for the UE, and in the search space set 1, DCI format A scrambled by an X-RNTI may be configured to be monitored in a common search space, and in the search space set 2, DCI format B scrambled by an Y-RNTI may be configured to be monitored in a UE-specific search space.

According to the configuration information, one or multiple search space sets may exist in the common search space or the UE-specific search space. For example, search space set #1 and search space set #2 may be configured as common search spaces, and search space set #3 and search space set #4 may be configured as UE-specific search spaces.

In the common search space, a combination of the following DCI format and RNTI may be monitored. The disclosure is not limited to the following examples.

- DCI format 0_0/1_0 with CRC scrambled by C-RNTI, CS-RNTI, MCS-C-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, a combination of the following DCI format and RNTI may be monitored. The disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the following definitions and uses.

C-RNTI (Cell RNTI): use for UE-specific PDSCH scheduling
MCS-C-RNTI (Modulation Coding Scheme C-RNTI): use for UE-specific PDSCH scheduling
TC-RNTI (Temporary Cell RNTI): use for UE-specific PDSCH scheduling
CS-RNTI (Configured Scheduling RNTI): use for semi-statically configured UE-specific PDSCH scheduling
RA-RNTI (Random Access RNTI): use for PDSCH scheduling in random access step
P-RNTI (Paging RNTI): use for PDSCH scheduling through which paging is transmitted
SI-RNTI (System Information RNTI): use for PDSCH scheduling through which system information is transmitted
INT-RNTI (Interruption RNTI): use for informing whether a PDSCH is punctured
TPC-PUSCH-RNTI (Transmit Power Control for PUSCH RNTI): use for indicating a power control command for a PUSCH
TPC-PUCCH-RNTI (Transmit Power Control for PUCCH RNTI): use for indicating a power control command for a PUCCH
TPC-SRS-RNTI (Transmit Power Control for SRS RNTI): use for indicating a power control command for an SRS
The specified DCI formats described above may follow the following definitions.

[Table 20]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands f or SRS transmissions by one or more UEs |

In the 5G wireless communication system, a search space of aggregation level L in control resource set p and search space set s may be expressed as the following equation.

[Equation 1]

$$L \cdot \left\{ \left( Y_{p,n_{s,f}^{\mu}} + \left\lfloor \frac{m_{s,n_{CI}} \cdot N_{\mathrm{CCE},p}}{L \cdot M_{p,s,\max}^{(L)}} \right\rfloor + n_{CI} \right) mod \left\lfloor N_{\mathrm{CCE},p}/L \right\rfloor \right\} + i$$

- L: aggregation level
- $n_{CI}$: carrier index
- $N_{\mathrm{CCE},p}$: total number of CCEs existing in control resource set p
- $n_{s,f}^{\mu}$: slot index
- $M_{p,s,\max}^{(L)}$: number of PDCCH candidates at aggregation level L
- $m_{snCI} = 0, ..., M_{p,s,\max}^{(L)}$ -1: PDCCH candidate index at aggregation level L
- i = 0, ..., L-1

- $Y_{p,n_{s,f}^{\mu}} = (A_p \boxplus Y_{p,n_{s,f}^{\mu}-1}) \bmod D$ , $Y_{p,-1} = n_{RNTI} @ 0$, $A_0 = 39827$, $A_1 = 39829$, $A_2 = 39839$, $D = 65537$

- $n_{RNTI}$: UE identifier

In the case of the common search space, a value of $Y\_(p,n^{\mu}_{s,f})$ may correspond to 0.

In the case of the UE-specific search space, a value of $Y\_(p,n^{\mu}_{s,f})$ may correspond to a value which is changed depending on the UE's identity (C-RNTI or ID configured for the UE by the base station) and a time index.

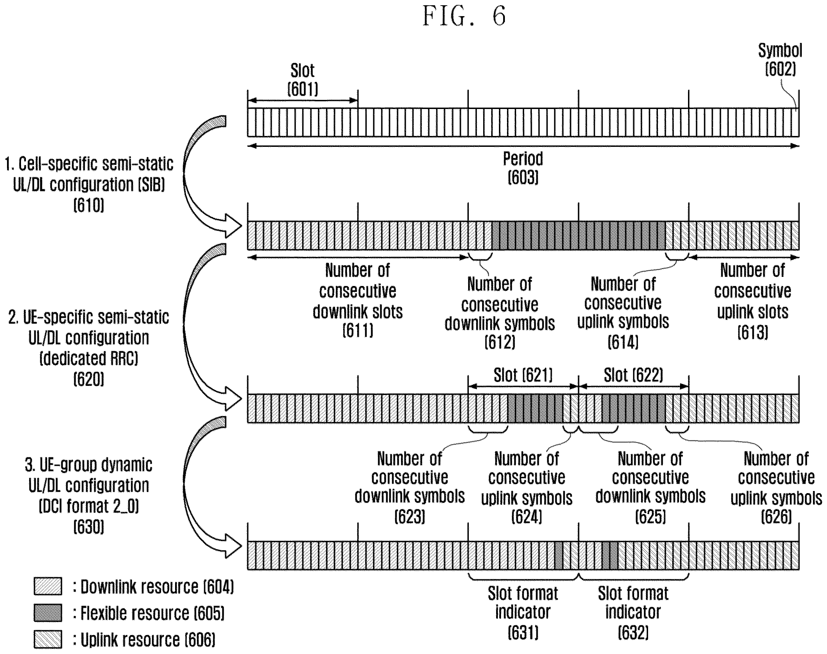

FIG. 6 illustrates an example of an uplink-downlink configuration considered in a 5G communication system according to an embodiment of the disclosure.

Referring to FIG. 6, a slot 601 may include 14 symbols 602. In the 5G communication system, an uplink-downlink configuration of a symbol/slot may be configured to have three steps. Firstly, an uplink-downlink of the symbol/slot may be semi-statically configured through cell-specific configuration information 610 through system information in the unit of a symbol. Specifically, cell-specific uplink-downlink configuration information through the system information may include uplink-downlink pattern information and subcarrier information which is a criterion. The uplink-downlink pattern information may indicate a pattern period (periodicity) 603, the number of consecutive downlink slots 611 from a start point of each pattern and the number of symbols 612 of the next slot, and the number of consecutive uplink slots 613 from the end of a pattern and the number of symbols 614 of the next slot. In this case, a slot and a symbol which are not indicated as an uplink or a downlink may be determined as a flexible slot/symbol.

Secondly, slots 621 and 622 including flexible slots or flexible symbols through user-specific configuration information through dedicated higher layer signaling may be indicated by the number of consecutive downlink symbols 623 and 625 from a start symbol of each slot and the number of consecutive uplink symbols 624 and 626 from the end of a slot, or may be indicated by the entire slot downlink or the entire slot uplink.

In addition, finally, in order to dynamically change downlink signal transmission and uplink signal transmission intervals, whether each of symbols indicated as flexible symbols in each slot (that is, symbols not indicated as a downlink and an uplink) is a downlink symbol, an uplink symbol, or a flexible symbol may be indicated through slot format indicators (SFIs) 631 and 632 included in a downlink control channel. A slot format indicator may be selected as one index from a table in which an uplink-downlink configuration of 14 symbols within one slot is preconfigured, as shown in Table 21 below.

[Table 21]

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |

(continued)

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |

(continued)

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 56-254 | Reserved | | | | | | | | | | | | | |
| 255 | UE determines the slot format for the slot based on *tdd-UL-DL-ConfigurationCommon*, or *tdd-UL-DL-ConfigurationDedicated* and, if any, on detected DCI formats | | | | | | | | | | | | | |

In an NR system, the UE may transmit uplink control information (UCI) to the base station through a physical uplink control channel (PUCCH). The control information may include at least one of HARQ-ACK indicating that demodulating/decoding a transport block (TB) received by the UE through a PDSCH succeeds or not, a scheduling request (SR) in which the UE requests resource allocation from a PUSCH base station for uplink data transmission, and channel state information (CSI) which is information for reporting a channel state of the UE.

A PUCCH resource may be broadly divided into a long PUCCH and a short PUCCH depending on the length of an allocated symbol. In the NR system, the long PUCCH has a length of 4 symbols or more within a slot, and the short PUCCH has a length of 2 symbols or less within a slot.

To describe the long PUCCH in more detail, the long PUCCH may be used for the purpose of improving uplink cell coverage, and thus transmitted using a DFT-S-OFDM manner which is single carrier transmission, rather than OFDM transmission. The long PUCCH supports transmission formats such as PUCCH format 1, PUCCH format 3, and PUCCH format 4 depending on the number of supportable control information bits and whether UE multiplexing is supported through Pre-DFT OCC support at a node before IFFT.

First, the PUCCH format 1 is a DFT-S-OFDM-based long PUCCH format which can support up to 2 bits of control information, and uses as many frequency resources as 1 RB. The control information may be configured by a combination of or each of HARQ-ACK and an SR. The PUCCH format 1 may include OFDM symbols including a demodulation reference signal (DMRS) which is a demodulation reference signal (or reference signal), and OFDM symbols including UCI, which are repeatedly configured.

For example, if the number of transmission symbols in the PUCCH format 1 is 8 symbols, the symbols may include a DMRS symbol, a UCI symbol, a DMRS symbol, a UCI symbol, a DMRS symbol, a UCI symbol, a DMRS symbol, and a UCI symbol in order, starting from the first start symbol of the 8 symbols. The DMRS symbol may be spread within one OFDM symbol to a sequence corresponding to the length of 1RB on the frequency axis by using an orthogonal code (or an orthogonal sequence or spreading code, $w_i(m)$) on the time axis, and transmitted after IFFT is performed.

For the UCI symbol, the UE may generate d(0) by performing BPSK modulation of 1-bit control information and QPSK modulation of 2-bit control information, scramble the generated d(0) by multiplying the same by a sequence corresponding to the length of 1 RB on the frequency axis, spread the scrambled sequence by using an orthogonal code (or an orthogonal sequence or spreading code, $w_i(m)$) on the time axis, perform IFFT on the spread sequence, and then transmit the same.

The UE generates a sequence, based on a group hopping or sequence hopping configuration configured through higher layer signaling from the base station and a configured ID, and cyclic-shifts the generated sequence with an initial cyclic shift (CS) value configured as a higher signal to generate a sequence corresponding to the length of 1 RB.

$w_i(m)$ is determined as $$w_i(m) = e^{\frac{j2\pi\Phi(m)}{N_{SF}}}$$ when a length ($N_{SF}$) of a spreading sign is given, and is specifically given as in [Table 22]. i means an index of the spreading sign itself, and m means an index of elements of the spreading sign. Numbers in [ ] in [Table 22] mean $\Phi(m)$, and for example, if the length of the spreading sign is 2 and the configured index of the spreading sign is i=0, spreading sign w_i(m) becomes $w_i(0)=e^{j\pi E0/N}{}_{SF}=1, w_i(1)=e^{j\pi E0/N}{}_{SF}=1$ and thus becomes $w_i(m)=[1\ 1]$.

[Table 22]

| $N_{SF,m'}^{PUCCH,1}$ | $\phi$ | | | | | | |
|---|---|---|---|---|---|---|---|
| | *i = 0* | *i = 1* | *i = 2* | *i = 3* | *i = 4* | *i = 5* | *i = 6* |
| 1 | [0] | - | - | - | - | - | - |
| 2 | [0 0] | [0 1] | - | - | - | - | - |
| 3 | [0 0 0] | [0 1 2] | [0 2 1] | - | - | - | - |

38

(continued)

| $N_{SF,m'}^{PUCCH,1}$ | $\phi$ | | | | | | |
|---|---|---|---|---|---|---|---|
| | $i = 0$ | $i = 1$ | $i = 2$ | $i = 3$ | $i = 4$ | $i = 5$ | $i = 6$ |
| 4 | [0 0 0 0] | [0 2 0 2] | [0 0 2 2] | [0 2 2 0] | - | - | - |
| 5 | [0 0 0 0 0] | [0 1 2 3 4] | [0 2 4 1 3] | [0 3 1 4 2] | [0 4 3 2 1] | - | - |
| 6 | [0 0 0 0 0 0] | [0 1 2 3 4 5] | [0 2 4 0 2 4] | [0 3 0 3 0 3] | [0 4 2 0 4 2] | [0 5 4 3 2 1] | - |
| 7 | [0 0 0 0 0 0 0] | [0 1 2 3 4 5 6] | [0 2 4 6 1 3 5] | [0 3 6 2 5 1 4] | [0 4 1 5 2 6 3] | [0 5 3 1 6 4 2] | [0 6 5 4 3 2 1] |

Next, the PUCCH format 3 is a DFT-S-OFDM-based long PUCCH format which can support more than 2 bits of control information, and the number of RBs used can be configured through a higher layer. The control information may be configured by a combination of or each of HARQ-ACK, an SR, and CSI. In the PUCCH format 3, a DMRS symbol position is presented in the following [Table 23] depending on whether intra-slot frequency hopping is performed and whether an additional DMRS symbol is configured.

[Table 23]

| PUCCH length | DM-RS position *l* within PUCCH span | | | |
|---|---|---|---|---|
| | No additional DM-RS | | Additional DM-RS | |
| | No hopping | Hopping | No hopping | Hopping |
| 4 | 1 | 0.2 | 1 | 0, 2 |
| 5 | 0, 3 | | 0, 3 | |
| 6 | 1, 4 | | 1, 4 | |
| 7 | 1, 4 | | 1, 4 | |
| 8 | 1, 5 | | 1, 5 | |
| 9 | 1, 6 | | 1, 6 | |
| 10 | 2, 7 | | 1, 3, 6, 8 | |
| 11 | 2, 7 | | 1, 3, 6, 9 | |
| 12 | 2, 8 | | 1, 4, 7, 10 | |
| 13 | 2, 9 | | 1, 4, 7, 11 | |
| 14 | 3, 10 | | 1, 5, 8, 12 | |

For example, if the number of transmission symbols in the PUCCH format 3 is 8 symbols, the first start symbol of the 8 symbols starts with 0, and a DMRS is transmitted to the first symbol and the fifth symbol. [Table 23] is applied in the same manner to a DMRS symbol position of the PUCCH format 4.

Next, the PUCCH format 4 is a DFT-S-OFDM-based long PUCCH format which can support more than 2 bits of control information, and uses as many frequency resources as 1 RB. The control information may be configured by a combination of or each of HARQ-ACK, an SR, and CSI. The difference between the PUCCH format 4 and the PUCCH format 3 is that in the case of the PUCCH format 4, PUCCH format 4 of multiple UEs may be multiplexed within one RB. It is possible to multiplex the PUCCH format 4 of the multiple UEs by applying Pre-DFT orthogonal cover code (OCC) to control information at a node before IFFT. However, the number of control information symbols which can be transmitted by one UE decreases according to the number of UEs being multiplexed. The number of UEs capable of multiplexing, that is, the number of different available OCCs, may be 2 or 4, and the number of OCCs and an OCC index to be applied may be configured through a higher layer.

Next, the short PUCCH will be described. The short PUCCH may be transmitted in both a downlink centric slot and an uplink centric slot, and may generally be transmitted in the last symbol of a slot, or in an OFDM symbol at the end part (for example, the last OFDM symbol, the penultimate OFDM symbol, or the last two OFDM symbols). The short PUCCH can also be transmitted at a predetermined position within the slot. Further, the short PUCCH may be transmitted using one OFDM symbol or two OFDM symbols. The short PUCCH may be used to reduce delay time compared to the long PUCCH in a situation where uplink cell coverage is good, and may be transmitted using a CP-OFDM manner.

The short PUCCH may support transmission formats such as PUCCH format 0 and PUCCH format 2 depending on the number of supportable control information bits. First, the PUCCH format 0 is a short PUCCH format which can support up to 2 bits of control information, and uses as many frequency resources as 1 RB. The control information may be configured by a combination of or each of HARQ-ACK and an SR. The PUCCH format 0 has a structure which transmits only a sequence mapped to 12 subcarriers on the frequency axis within one OFDM symbol without transmitting a DMRS. The UE may generate a sequence, based on a group hopping or sequence hopping configuration configured through a higher signal from the base station and a configured ID, may cyclic-shift the generated sequence by using a final CS value obtained by adding, to an indicated initial cyclic shift (CS) value, a CS value which is different depending on whether it is ACK or NACK, may map the cyclic-shifted sequence to 12 subcarriers, and may then transmit the same.

For example, when HARQ-ACK is 1 bit, as shown in [Table 24] below, the UE may generate a final CS by adding 6 to an initial CS value if it is ACK, and generate a final CS by adding 0 to an initial CS if it is NACK. A CS value of 0 for NACK and a CS value of 6 for ACK are defined in the standard, and the UE may transmit 1-bit HARQ-ACK by generating PUCCH format 0 according to a value defined in the standard.

[Table 24]

| HARQ-ACK Value | 0 | 1 |
|---|---|---|
| Sequence cyclic shift | $m_{CS} = 0$ | $m_{CS} = 6$ |

For example, when HARQ-ACK is 2 bits, as shown in Table 25 below, the UE adds 0 to an initial CS value if it is (NACK, NACK), adds 3 to the initial CS value if it is (NACK, ACK), adds 6 to the initial CS value if it is (ACK, ACK), and adds 9 to the initial CS value if it is (ACK, NACK). A CS value of 0 for (NACK, NACK), a CS value of 3 for (NACK, ACK), a CS value of 6 for (ACK, ACK), and a CS value of 9 for (ACK, NACK) are defined in the standard, the UE may transmit 2-bit HARQ-ACK by generating PUCCH format 0 according to a value defined in the standard.

If a final CS value exceeds 12 due to a CS value added to an initial CS value according to ACK or NACK, modulo 12 may be applied to the final CS value since the length of a sequence is 12.

[Table 25]

| HARQ-ACK Value | {0, 0} | {0, 1} | {1, 1} | {1, 0} |
|---|---|---|---|---|
| Sequence cyclic shift | $m_{CS} = 0$ | $m_{CS} = 3$ | $m_{CS} = 6$ | $m_{CS} = 9$ |

Next, the PUCCH format 2 is a short PUCCH format which supports more than 2 bits of control information, and the number of RBs used may be configured through a higher layer. The control information may be configured by a combination of or each of HARQ-ACK, an SR, and CSI. When an index of the first subcarrier is referred to as #0, in the PUCCH format 2, a position of a subcarrier on which a DMRS is transmitted within one OFDM symbol may be fixed to subcarriers having indexes of #1, #4, #7, and #10. The control information may be mapped to the remaining subcarriers other than a subcarrier where a DMRS is positioned through a modulation process after channel encoding.

In order to enhance uplink coverage, multi-slot repetition may be supported for PUCCH formats 1, 3, and 4, and PUCCH repetition may be configured for each PUCCH format. The UE may perform repetitive transmission on a PUCCH including as many UCIs as the slots configured through nrofSlots, which is higher layer signaling. For PUCCH repetitive transmission, PUCCH transmission in each slot is performed using the same number of consecutive symbols and the number of corresponding consecutive symbols may be configured through nrofSymbols in the PUCCH-format1, PUCCH-format3, or PUCCH-format4, which is higher layer signaling. For PUCCH repetitive transmission, PUCCH transmission in each slot is performed using the same start symbol, and a corresponding start symbol may be configured through startingSymbolIndex in the PUCCH-format 1, PUCCH-format 3, or PUCCH-format 4, which is higher layer signaling. For PUCCH repetitive transmission, single PUCCH-spatialRelationInfo may be configured for a single PUCCH resource. For PUCCH repetitive transmission, if the UE is allowed through configuration to perform frequency hopping in PUCCH transmission in different slots, the UE may perform frequency hopping in the unit of a slot. In addition, if the UE is allowed through configuration to perform frequency hopping in PUCCH transmission in different slots, in the even-numbered slot, the UE may start PUCCH transmission from the first PRB index configured through startingPRB, which is higher layer signaling, and in the odd-numbered slot, the UE may start PUCCH transmission from the second PRB index configured through secondHopPRB, which is higher layer signaling. Additionally, if the UE is allowed through configuration to perform frequency hopping in PUCCH transmission in different slots, an index of a slot through which the UE is instructed to transmit the first PUCCH is number 0, and during the configured total number of PUCCH repetitive transmission, a PUCCH repetitive transmission number value may be increased regardless of PUCCH transmission performance in each slot. If the UE is allowed through configuration to perform frequency hopping in PUCCH transmission in different slots, the UE does not expect frequency hopping to be configured within a slot when a PUCCH is transmitted. If the UE is not allowed through configuration to perform frequency hopping in PUCCH transmission in different slots, but is allowed through configuration to perform frequency hopping within a slot, the first and second PRB indexes may be applied equally even within the slot. If the number of uplink symbols capable of transmitting a PUCCH is smaller than nrofSymbols configured through higher layer signaling, the UE may not transmit a PUCCH. Even when the UE has failed to transmit a PUCCH for some reasons in a slot during PUCCH repetitive transmission, the UE may increase the number of PUCCH repetitive transmissions.

Next, a PUCCH resource configuration of the base station or the UE is described. The base station can configure a PUCCH resource for each BWP through a higher layer for a specific UE. The PUCCH resource configuration may be as shown in [Table 26] below.

[Table 26]

```
PUCCH-Config ::=                              SEQUENCE {
        resourceSetToAddModList                  SEQUENCE (SIZE (1..maxNrofPUCCH-ResourceSets))
OF PUCCH-ResourceSet      OPTIONAL, -- Need N
        resourceSetToReleaseList                 SEQUENCE (SIZE (1..maxNrofPUCCH-ResourceSets))
OF PUCCH-ResourceSetId OPTIONAL, -- Need N
        resourceToAddModList                     SEQUENCE (SIZE (1..maxNrofPUCCH-Resources)) OF
PUCCH-Resource                OPTIONAL, -- Need N
        resourceToReleaseList                    SEQUENCE (SIZE (1..maxNrofPUCCH-Resources)) OF
PUCCH-ResourceId          OPTIONAL, -- Need N
        format1                                  SetupRelease { PUCCH-FormatConfig }
OPTIONAL, -- Need M
        format2                                  SetupRelease { PUCCH-FormatConfig }
OPTIONAL, -- Need M
        format3                                  SetupRelease { PUCCH-FormatConfig }
OPTIONAL, -- Need M
        format4                                  SetupRelease { PUCCH-FormatConfig }
OPTIONAL, -- Need M

        schedulingRequestResourceToAddModList    SEQUENCE (SIZE (1..maxNrofSR-Resources)) OF
SchedulingRequestResourceConfig

OPTIONAL, -- Need N
        schedulingRequestResourceToReleaseList   SEQUENCE (SIZE (1..maxNrofSR-Resources)) OF
SchedulingRequestResourceId

OPTIONAL, -- Need N
        multi-CSI-PUCCH-ResourceList             SEQUENCE (SIZE (1..2)) OF PUCCH-ResourceId
OPTIONAL, -- Need M
        dl-DataToUL-ACK                          SEQUENCE (SIZE (1..8)) OF INTEGER (0..15)
OPTIONAL, -- Need M

        spatialRelationInfoToAddModList          SEQUENCE (SIZE (1..maxNrofSpatialRelationInfos)) OF
PUCCH-SpatialRelationInfo

OPTIONAL, -- Need N
        spatialRelationInfoToReleaseList         SEQUENCE (SIZE (1..maxNrofSpatialRelationInfos)) OF
PUCCH-SpatialRelationInfoId

OPTIONAL, -- Need N
        pucch-PowerControl                       PUCCH-PowerControl
OPTIONAL, -- Need M
        ...
}
```

According to [Table 26], one or multiple PUCCH resource sets may be configured in a PUCCH resource configuration for a specific BWP, and a maximum payload value for UCI transmission may be configured in a part of the PUCCH resource sets. Each of the PUCCH resource sets may include one or multiple PUCCH resources, and each of the PUCCH resources may belong to one of the above-described PUCCH formats.

For the PUCCH resource sets, a maximum payload value of the first PUCCH resource set may be fixed to be 2 bits. Accordingly, the corresponding value may not be configured separately through a higher layer, etc. If the remaining PUCCH resource sets are configured, an index of a corresponding PUCCH resource set may be configured in an ascending order according to a maximum payload value, and a maximum payload value may not be configured in the last PUCCH resource set. A higher layer configuration for a PUCCH resource set may be as shown in [Table 27] below.

[Table 27]

```
-- A set with one or more PUCCH resources
PUCCH-ResourceSet ::=                      SEQUENCE {
       pucch-ResourceSetId                      PUCCH-ResourceSetId,
       resourceList                             SEQUENCE (SIZE (1..maxNrofPUCCH-
ResourcesPerSet)) OF PUCCH-ResourceId,
       maxPayloadSize                           INTEGER (4..256)
OPTIONAL    -- Need R
}
```

A resourceList parameter in [Table 27] may include IDs of PUCCH resources belonging to a PUCCH resource set.

In the case of initial access or if a PUCCH resource set is not configured, a PUCCH resource set as shown in [Table 28] below, which is configured by multiple cell-specific PUCCH resources in an initial BWP, may be used. Within the PUCCH resource set, a PUCCH resource to be used for initial access may be indicated through SIB1.

[Table 28]

| Index | PUCCH format | First symbol | Number of symbols | PRB offset $RB_{BWP}^{offset}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{BWP}^{size}/4 \right\rfloor$ | {0, 3, 6, 9} |

A maximum payload of each of PUCCH resources included in the PUCCH resource set may be 2 bits in the case of PUCCH format 0 or 1, and in the case of the remaining formats, the maximum payload may be determined by a symbol length, the number of PRBs, and a maximum code rate. The symbol length and the number of PRBs may be configured for each PUCCH resource, and the maximum code rate may be configured for each PUCCH format.

Next, PUCCH resource selection for UCI transmission is described. In the case of SR transmission, a PUCCH resource for an SR corresponding to schedulingRequestID may be configured through a higher layer, as shown in [Table 29] below. The PUCCH resource may be a resource belonging to the PUCCH format 0 or PUCCH format 1.

[Table 29]

```
SchedulingRequestResourceConfig ::=    SEQUENCE {
        schedulingRequestResourceId            SchedulingRequestResourceId,
        schedulingRequestID                    SchedulingRequestId,
        periodicityAndOffset                   CHOICE {
            sym2                                   NULL,
            sym6or7                                NULL,
            sl1                                    NULL,             --
Recurs in every slot
            sl2                                    INTEGER (0..1),
            sl4                                    INTEGER (0..3),
            sl5                                    INTEGER (0..4),
            sl8                                    INTEGER (0..7),
            sl10                                   INTEGER (0..9),
            sl16                                   INTEGER (0..15),
            sl20                                   INTEGER (0..19),
            sl40                                   INTEGER (0..39),
            sl80                                   INTEGER (0..79),
            sl160                                  INTEGER (0..159),
            sl320                                  INTEGER (0..319),
            sl640                                  INTEGER (0..639)
        }
OPTIONAL,       -- Need M
        resource                               PUCCH-ResourceId
OPTIONAL         -- Need M
}
```

For the configured PUCCH resource, a transmission period and an offset may be configured through a periodicity AndOffset parameter in [Table 29]. If uplink data to be transmitted by the UE exists at a time point corresponding to the configured period and offset, the corresponding PUCCH resource is transmitted, and otherwise, the corresponding PUCCH resource may not be transmitted.

In the case of CSI transmission, a PUCCH resource which is to transmit a periodic or semi-persistent CSI report through a PUCCH may be configured in a pucch-CSI-ResourceList parameter as shown in [Table 30] below. The pucch-CSI-ResourceList parameter may include a list of PUCCH resources for each BWP for a cell or CC which is to transmit a corresponding CSI report. The PUCCH resource may be a resource belonging to PUCCH format 2, PUCCH format 3, or PUCCH format 4.

[Table 30]

```
CSI-ReportConfig ::=                    SEQUENCE {
        reportConfigId                          CSI-ReportConfigId,
        carrier                                 ServCellIndex                   OPTIONAL,
-- Need S
        resourcesForChannelMeasurement          CSI-ResourceConfigId,
        csi-IM-ResourcesForInterference         CSI-ResourceConfigId            OPTIONAL,     --
Need R
        nzp-CSI-RS-ResourcesForInterference     CSI-ResourceConfigId            OPTIONAL,     --
Need R
        reportConfigType                        CHOICE {
            periodic                                SEQUENCE {
                reportSlotConfig                        CSI-ReportPeriodicityAndOffset,
                pucch-CSI-ResourceList                  SEQUENCE (SIZE (1..maxNrofBWPs)) OF
PUCCH-CSI-Resource
            },
            semiPersistentOnPUCCH                   SEQUENCE {
                reportSlotConfig                        CSI-ReportPeriodicityAndOffset,
                pucch-CSI-ResourceList                  SEQUENCE (SIZE (1..maxNrofBWPs)) OF
PUCCH-CSI-Resource
            },
```

For the PUCCH resource, a transmission period and an offset may be configured through reportSlotConfig in [Table 30].

In the case of HARQ-ACK transmission, a resource set of PUCCH resources to be transmitted may be selected first according to a payload of UCI including the corresponding HARQ-ACK. That is, a PUCCH resource set having a minimum payload that is not smaller than the UCI payload may be selected. Next, a PUCCH resource in the PUCCH resource set may be selected through a PUCCH resource indicator (PRI) in DCI which schedules a TB corresponding to the corresponding HARQ-ACK, and the PRI may be a PUCCH resource indicator specified in [Table 6] or [Table 7]. The relationship between the PRI and the PUCCH resource selected from the PUCCH resource set may be as shown in [Table 31] below.

[Table 31] [262]

| PUCCH resource indicator | PUCCH resource |
|---|---|
| '000' | 1st PUCCH resource provided by *pucch-ResourceId* obtained from the 1st value of *resourceList* |
| '001' | 2nd PUCCH resource provided by *pucch-ResourceId* obtained from the 2nd value of *resourceList* |
| '010' | 3rd PUCCH resource provided by *pucch-ResourceId* obtained from the 3rd value of *resourceList* |
| '011' | 4th PUCCH resource provided by *pucch-ResourceId* obtained from the 4th value of *resourceList* |
| '100' | 5th PUCCH resource provided by *pucch-ResourceId* obtained from the 5th value of *resourceList* |
| '101' | 8th PUCCH resource provided by *pucch-ResourceId* obtained from the 6th value of *resource List* |
| '110' | 7th PUCCH resource provided by *pucch-ResourceId* obtained from the 7th value of *resourceList* |
| '111' | 8th PUCCH resource provided by *pucch-ResourceId* obtained from the 8th value of *resourceList* |

If the number of PUCCH resources in the selected PUCCH resource set is greater than 8 a PUCCH resource may be selected by the following equation.

[Equation 2]

$$r_{\text{PUCCH}} = \begin{cases} \left\lfloor \dfrac{n_{\text{CCE},p} \cdot \lfloor R_{\text{PUCCH}}/8 \rfloor}{N_{\text{CCE},p}} \right\rfloor + \varDelta_{\text{PRI}} \cdot \left\lceil \dfrac{R_{\text{PUCCH}}}{8} \right\rceil & \text{if } \varDelta_{\text{PRI}} < R_{\text{PUCCH}} \bmod 8 \\[4mm] \left\lfloor \dfrac{n_{\text{CCE},p} \cdot \lfloor R_{\text{PUCCH}}/8 \rfloor}{N_{\text{CCE},p}} \right\rfloor + \varDelta_{\text{PRI}} \cdot \left\lfloor \dfrac{R_{\text{PUCCH}}}{8} \right\rfloor + R_{\text{PUCCH}} \bmod 8 & \text{if } \varDelta_{\text{PRI}} \geq R_{\text{PUCCH}} \bmod 8 \end{cases}$$

In [Equation 2], $r_{PUCCH}$ indicates an index of the selected PUCCH resource in the PUCCH resource set, $R_{PUCCH}$ indicates the number of PUCCH resources belonging to the PUCCH resource set, $\varDelta_{PRI}$ indicates a PRI value, $N_{CCE,p}$ indicates the total number of CCEs in CORESET p to which received DCI belongs, and $n_{CCE,p}$ indicates the first CCE index for the received DCI.

A time point at which the corresponding PUCCH resource is transmitted is after slot $K_1$ from TB transmission corresponding to the corresponding HARQ-ACK. Candidates for a $K_1$ value is configured through a higher layer, and more specifically, may be configured in a dl-DataToUL-ACK parameter in PUCCH-Config specified in [Table 21]. One $K_1$ value among these candidates may be selected by a PDSCH-to-HARQ feedback timing indicator in the DCI which schedules the TB, and this value may be a value specified in [Table 5] or [Table 6]. The unit of a $K_1$ value may be the unit of a slot or the unit of a subslot. The subslot is the unit of length smaller than a slot, and one or multiple symbols may constitute one subslot.

In a 5G mobile communication service, additional coverage expansion technology has been introduced compared to an LTE communication service, but in an actual 5G mobile communication service, a TDD system suitable for a service having a high proportion of downlink traffic may be generally used. In addition, as a center frequency increases to increase a frequency band, the coverage of the base station and the UE decreases, and thus coverage enhancement is a key requirement for the 5G mobile communication service. In particular, in order to support a service where the transmission power of the UE is lower overall than that of the base station and a proportion of downlink traffic is high, since the ratio of downlinks is higher than an the ratio of uplinks in a time domain, coverage enhancement of an uplink channel is a key requirement for the 5G mobile communication service. A method for physically enhancing coverage of an uplink channel between a base station and a UE may include a method for increasing a time resource of an uplink channel, lowering a center frequency, or increasing a transmission power of a UE. However, changing of a frequency may have restrictions since a frequency band is determined for each network operator. In addition, since a maximum transmission power of the UE is regulated to reduce interference, there may be a restriction on increasing the maximum transmission power of the UE to enhance coverage.

Accordingly, in order to enhance coverage of the base station and the UE, not only can uplink and downlink resources be divided in a time domain according to the proportion of uplink and downlink traffic, as in a TDD system, but also uplink and downlink resources can also be divided in a frequency domain, as in an FDD system. In an embodiment, a system which can flexibly divide an uplink resource and a downlink resource in a time domain and a frequency domain may be referred to as an XDD system, a flexible TDD system, a hybrid TDD system, a TDD-FDD system, a hybrid TDD-FDD system, etc. For convenience of description, the system is described as an XDD system in this disclosure. According to an embodiment, in XDD, X may refer to a time or a frequency.

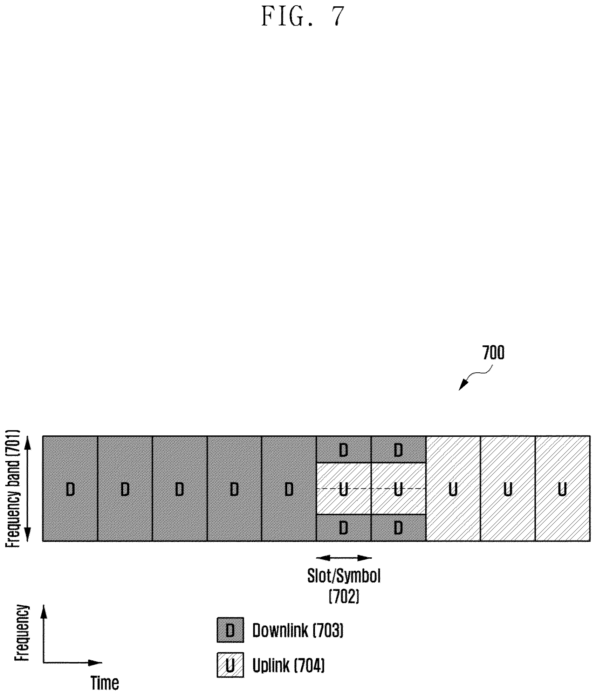

FIG. 7 illustrates an example of an uplink-downlink resource configuration of an XDD system according to an embodiment of the disclosure.

FIG. 7 illustrates an example of an uplink-downlink resource configuration 700 which can be allocated in an XDD system with respect to a frequency band 701. The frequency band 701 may be, for example, a unit defined in a frequency domain, such as a system bandwidth, a component carrier, or a bandwidth part, but is not limited thereto, and may be a band having a predetermined size which is defined or configurable for XDD system operation. As shown in FIG. 7, in the XDD system, both a downlink resource 703 and an uplink resource 704 may be allocated in one slot or symbol 702 of the frequency band 701. Hereinafter, it should be noted that the content described below based on the unit of a slot in the disclosure may be equally applied to an XDD system based on the unit of a symbol. As an example of a method in which both the downlink resource 703 and the uplink resource 704 are allocated in the one slot or symbol 702 of the frequency band 701, within the one slot or symbol 702, a frequency resource having a predetermined size with reference to a center frequency of the frequency band 701 may be allocated as the downlink resource 703 or the uplink resource 704, and the remaining frequency resources may be allocated as the uplink resource 704 or the downlink resource 703, respectively. Alternatively, as another example of a method in which both the downlink resource 703 and the uplink resource 704 are allocated in the one slot or symbol 702 of the frequency band 701, within the one slot or symbol 702, a resource in a low frequency band having a predetermined size may be allocated as the downlink resource 703 or the uplink resource 704, and resources in a high frequency band excluding the predetermined size may be allocated as the uplink resource 704 or the downlink resource 703, respectively. However, this is only described for illustrative purposes and does not limit the disclosure. In addition to the examples described above, each of the downlink resource 703 and the uplink resource 704 may be allocated in a predetermined frequency band within the one slot or symbol 702. Although not shown in the drawing, a guard band may be allocated between the downlink resource and the uplink resource 703 and the uplink resource 704. The guard band 704 may be allocated as a measure for reducing interference applied on an uplink channel or signal reception due to out-of-band emission which occurs when a base station transmits a downlink channel or a signal in the downlink resource 703. Hereinafter, unless specifically defined in the disclosure, the term "XDD configuration" may refer to the uplink-downlink resource configuration 700 of the XDD system.

The XDD configuration may be broadcasted through a system information block (SIB), or may be configured through radio resource control (RRC) signaling or higher layer signaling, configured through MAC CE or DCI, or configured through a combination of the above. In an embodiment, the XDD configuration may be established to indicate a time or a frequency resource used as an uplink resource and a downlink resource for each cell for the XDD system in a similar method to a TDD uplink-downlink configuration. In an embodiment, the XDD configuration may be established based on XDD BWP configuration information by using a separate XDD BWP defined for the XDD system, or established by a method in which some slots or symbols of a DL BWP configuration or a UL BWP configuration are configured for XDD and are used as an XDD slot or symbol in which both uplink and downlink resources exist. Depending on a configuration method, the XDD configuration may be established together with a corresponding PUCCH resource, or there may be no corresponding PUCCH resource. Therefore, hereinafter, in the disclosure, when there is a PUCCH resource configuration corresponding to the XDD configuration, a PUCCH resource may be understood as a resource based on the corresponding PUCCH resource configuration. In contrast, when there is no PUCCH resource configuration corresponding to the XDD configuration, a PUCCH resource may be determined based on a PUCCH resource configuration configured for an initial UL BWP, may be determined based on a PUCCH resource configuration configured for the most recently activated UL BWP, may be determined based on a PUCCH resource configuration separately defined for the XDD system, or may be determined based on a PUCCH resource configuration of a default BWP separately defined/configured for the XDD system.

As shown in FIG. 7, in the XDD system, since both a downlink resource and an uplink resource may be configured in one slot or symbol, a slot/symbol through which the UE and the base station are to transmit or receive a PUCCH may include a downlink resource due to the XDD configuration, or a part of a PUCCH resource may overlap a downlink resource in the slot/symbol through which a PUCCH is to be transmitted or received, due to the XDD configuration. In this case, since the corresponding downlink resource cannot be used for PUCCH transmission, the XDD system requires a method for transmitting a PUCCH in consideration of a downlink resource configured within a slot or a symbol. The following description will focus on an operation of the UE for PUCCH transmission, but even if not separately mentioned, may be understood that the base station communicating with the UE also performs an operation corresponding thereto. That is, in the following description, when the UE performs or does not perform a specific operation, the base station may expect the UE to perform or not perform the operation and perform an operation corresponding thereto.

Hereinafter, with reference to the drawings, for description, PUCCH transmission including HARQ-ACK information is described as an example, but the disclosure may also be applied to PUCCH transmission including predetermined UCI in addition to HARQ-ACK information.

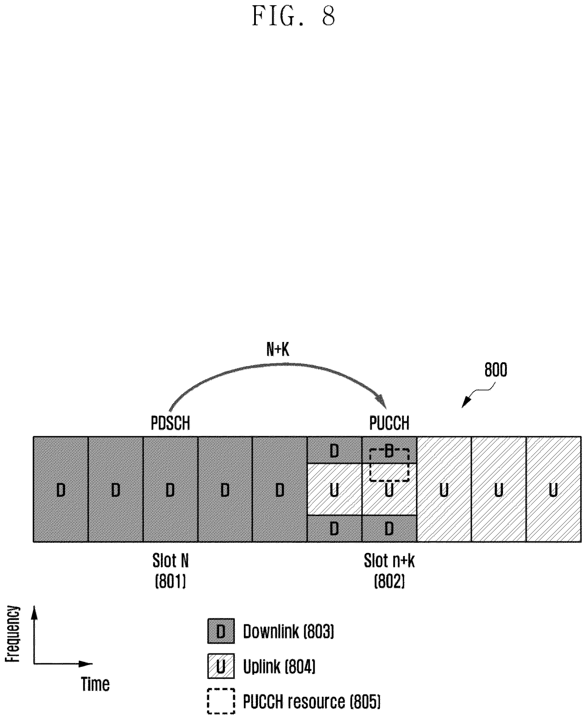

FIG. 8 illustrates an example in which a PUCCH resource is allocated in an XDD system according to an embodiment of the disclosure.

In FIG. 8, a description is made assuming that transmission timing of a PUCCH including HARQ-ACK information for a PDSCH received in slot n 801 is determined as slot n+k 802 (800). In such a situation, when the slot n+k 802 is configured to include not only an uplink resource 804 but also a downlink resource 803 due to an XDD configuration, a part or the entire of a configured PUCCH resource 805 may overlap the downlink resource 803. In this case, the corresponding downlink resource cannot be used for PUCCH transmission. As such, if a part of a PUCCH transmission slot resource or a part of a configured PUCCH resource cannot be used for PUCCH transmission due to the XDD configuration, the UE is required to determine a method for transmitting a PUCCH in consideration of an XDD configuration, such as dropping PUCCH transmission, transmitting a PUCCH in a different slot or symbol, or transmitting a PUCCH by using only an available uplink resource. Therefore, the disclosure defines a condition for determining a PUCCH transmission method in consideration of an XDD configuration and proposes a method for transmitting a PUCCH depending on whether the condition is satisfied.

Hereinafter, in the disclosure, a case where a PUCCH resource of a slot or a symbol satisfies a specific condition due to an XDD configuration is defined as a case where a proper PUCCH resource does not exist in the slot or the symbol. In this case, the specific condition, that is, a condition for determining that a proper PUCCH resource does not exist, may be defined based on, for example, one of the following conditions.

- A case where at least a partial resource of a slot or a symbol includes a downlink resource: a case where a slot through which a PUCCH is to be transmitted includes a downlink resource may be defined as a case where a proper PUCCH resource does not exist.

- A case where a part or the entire of a PUCCH resource overlaps a downlink resource in a slot or a symbol: a case where a slot through which a PUCCH is to be transmitted includes a downlink resource, and a PUCCH resource overlaps the corresponding downlink resource may be defined as a case where a proper PUCCH resource does not exist.

- A case where a part or the entire of a PUCCH resource overlaps a downlink resource in a slot or a symbol, and the ratio or amount of the overlapping downlink resource is greater than or equal to a predetermined range or threshold (or when the ratio or amount of an uplink resource is less than or equal to a predetermined range or threshold): a case where a slot through which a PUCCH is to be transmitted includes a downlink resource, a PUCCH resource overlaps the corresponding downlink resource, and there are many downlink resources which cannot be used for PUCCH transmission due to overlapping, or there are few uplink resources which can be used for PUCCH transmission excluding downlink resources may be defined as a case where a proper PUCCH resource does not exist. A criterion for "many" or "few" may be determined based on a ratio or absolute amount of a downlink resource or an uplink resource being greater than or equal to, or less than or equal to a predetermined range or threshold. The absolute amount may be defined based on units such as a resource element (RE), a symbol, and a physical resource element (PRB). The predetermined range or threshold may be a value preconfigured for the UE or the base station, or may be transmitted or received through predetermined signaling between the UE and the base station.

If a PUCCH resource of a slot through which a PUCCH is to be transmitted does not satisfy a preconfigured specific condition among the conditions defined above, the UE may determine that a proper PUCCH resource for PUCCH transmission exists in the corresponding slot and transmit a PUCCH by using the proper PUCCH resource in the corresponding slot. On the other hand, if a PUCCH resource of a slot through which a PUCCH is to be transmitted satisfies a preconfigured specific condition among the conditions defined above, the UE may determine that a proper PUCCH resource for PUCCH transmission does not exist in the corresponding slot and may or may not transmit a PUCCH according to the method below.

[Method 1]

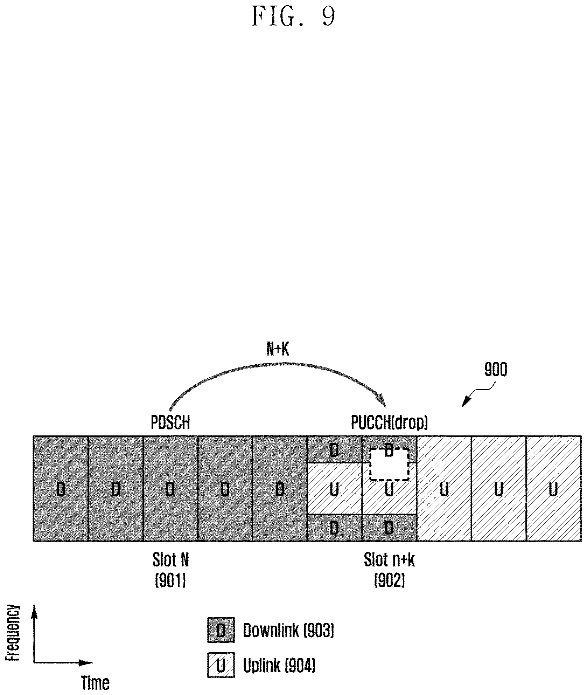

FIG. 9 illustrates an example of a method for transmitting a PUCCH in an XDD system according to an embodiment of the disclosure.
Referring to FIG. 9, according to the above-described method for determining HARQ-ACK transmission timing, timing for transmitting a PUCCH including HARQ-ACK information for a PDSCH received in slot n 901 may be determined as slot n+k 902. In this case, according to an uplink-downlink resource configuration 900 according to an XDD configuration, the slot n+k 902 may include both a downlink resource 903 and an uplink resource 904, and a proper PUCCH resource may not exist in the slot n+k 902 due to the downlink resource 903. In the embodiment of FIG. 9, when a proper PUCCH resource does not exist in the slot n+k 902 through which a PUCCH is to be transmitted, the UE may drop PUCCH transmission. That is, the UE may not transmit the PUCCH including the HARQ-ACK information for the PDSCH received in the slot n 901.

[Method 2]

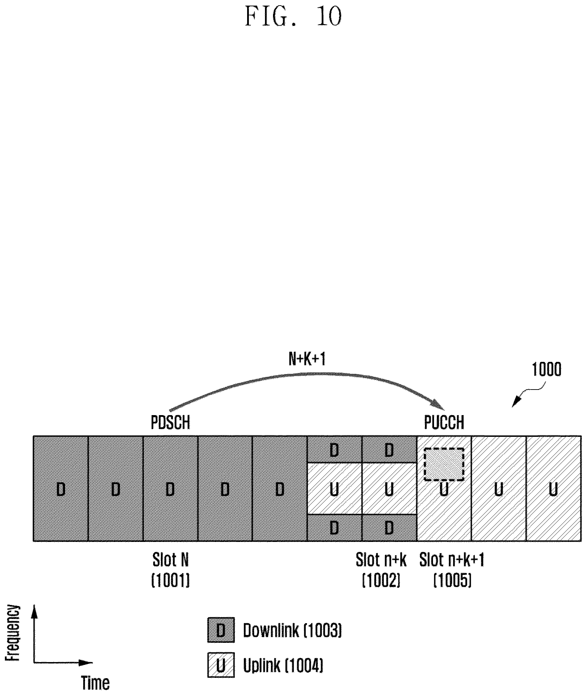

FIG. 10 illustrates another example of a method for transmitting a PUCCH in an XDD system according to an embodiment of the disclosure.
Referring to FIG. 10, according to the above-described method for determining HARQ-ACK transmission timing, timing for transmitting a PUCCH including HARQ-ACK information for a PDSCH received in slot n 1001 may be determined as slot n+k 1002. In this case, according to an uplink-downlink resource configuration 1000 according to an XDD configuration, the slot n+k 1002 may include both a downlink resource 1003 and an uplink resource 1004, and a proper PUCCH resource may not exist in the slot n+k 1002 due to the downlink resource 1003. In the embodiment of FIG. 10, when a proper PUCCH resource does not exist in the slot n+k 1002 through which a PUCCH is to be transmitted, the UE may transmit a PUCCH in slot n+k+$\alpha$ where a proper PUCCH resource exists after the slot n+k 1002. For example, the slot n+k+$\alpha$ may be determined as the closest slot in which a proper PUCCH resource exists after the slot n+k 1002. For example, as shown in FIG. 10, when a proper PUCCH resource exists in slot n+k+1 1005, a PUCCH may be transmitted in the slot n+k+1 1005. In the example of FIG. 10, a case where the slot n+k+1 1005 does not include a downlink resource is described as an example, but depending on the above-described definition of a proper PUCCH resource, when a proper PUCCH resource exists even when a specific slot includes a downlink resource or a downlink resource overlaps a part of a PUCCH resource, a PUCCH may be transmitted in a corresponding slot.

[Method 3]

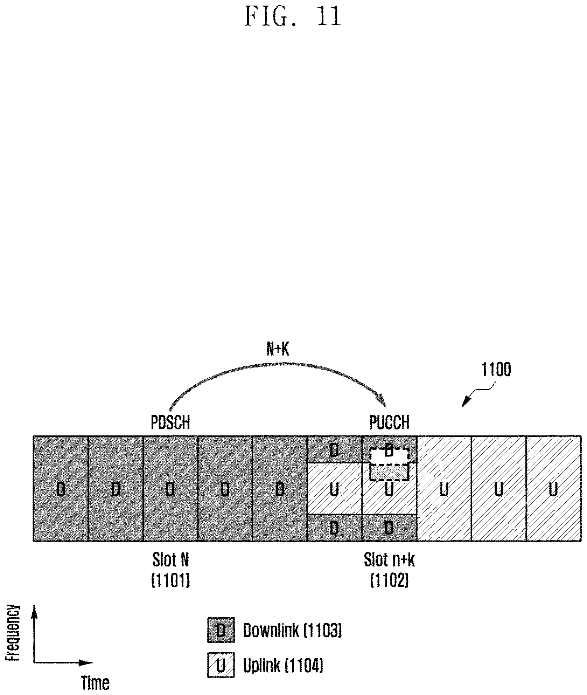

FIG. 11 illustrates another example of a method for transmitting a PUCCH in an XDD system according to an embodiment of the disclosure.

Referring to FIG. 11, according to the above-described method for determining HARQ-ACK transmission timing, timing for transmitting a PUCCH including HARQ-ACK information for a PDSCH received in slot n 1101 may be determined as slot n+k 1102. In this case, according to an uplink-downlink resource configuration 1100 according to an XDD configuration, the slot n+k 1102 may include both a downlink resource 1103 and an uplink resource 1104, and a part of a PUCCH resource may overlap the downlink resource 1103. In the embodiment of FIG. 11, the UE may transmit a PUCCH in the slot n+k 1102 by using only the uplink resource 1104 excluding the downlink resource 1103 in the PUCCH resource. Hereinafter, in this disclosure, the transmitting of the PUCCH by using the uplink resource excluding the downlink resource in the PUCCH resource configured as shown in FIG. 11 is referred to as scaling of a PUCCH resource, and an uplink resource used for PUCCH transmission is referred to as a scaled PUCCH resource. However, it should be noted that this is named arbitrarily for description and does not limit the scope of the disclosure. In FIG. 11, PUCCH resource scaling for PUCCH transmission based on a scaled PUCCH resource may be performed within a predetermined range. For example, the scaling may be performed based on a range or a threshold defined based on a ratio or absolute amount of a downlink resource or an uplink resource in a PUCCH resource like the above-described method for defining a proper PUCCH resource.

The PUCCH transmission methods according to [Method 1] to [Method 3] above may be performed independently or in combination with one or more of the methods.

For example, if timing for transmitting a PUCCH including HARQ-ACK information for a PDSCH received in slot n is determined as slot n+k, and a part of a PUCCH resource overlaps a downlink resource of the slot n+k due to the XDD configuration, the UE may transmit a PUCCH in the slot n+k by using a scaled PUCCH resource within a predetermined range. On the other hand, if the scaled PUCCH resource is outside of the predetermined range, PUCCH transmission may be dropped as shown in FIG. 9, or a PUCCH may be transmitted in slot n+k+$\alpha$ as shown in FIG. 10.

According to an embodiment of the disclosure, whether to apply scaling of a PUCCH resource may be previously configured for the UE or may be configured by signaling of the base station. The UE may transmit a PUCCH by using [Method 1] to [Method 3] depending on the configured "whether to apply scaling of a PUCCH resource".

In an embodiment, when scaling of a PUCCH resource is configured not to be applied and a proper PUCCH resource does not exist in the slot n+k due to the XDD configuration, the UE may drop PUCCH transmission.

In an embodiment, when scaling of a PUCCH resource is configured not to be applied and a proper PUCCH resource does not exist in the slot n+k due to the XDD configuration, the UE may transmit a PUCCH in the slot n+k+$\alpha$ where a proper PUCCH resource exists.

In an embodiment, even when scaling of a PUCCH resource is configured not to be applied, if a proper PUCCH resource exists in the slot n+k, the UE may transmit a PUCCH in the slot n+k.

In an embodiment, when scaling of a PUCCH resource is configured to be applied and a proper PUCCH resource does not exist in the slot n+k due to the XDD configuration, the UE may transmit a PUCCH by using the scaled PUCCH resource in the slot n+k. In this case, the scaling of the PUCCH resource may be performed within a predetermined range, and if the scaled PUCCH resource is outside of the predetermined range, PUCCH transmission may be dropped or a PUCCH may be transmitted in the slot n+k+$\alpha$.

In an embodiment, when scaling of a PUCCH resource is configured to be applied and a proper PUCCH resource exists in the slot n+k, the UE may transmit a PUCCH by using the proper PUCCH resource in the slot n+k.

According to an embodiment of the disclosure, whether PUCCH transmission is possible in a slot including a downlink resource may be previously configured for the UE or may be configured by signaling of the base station. The UE may transmit a PUCCH by using [Method 1] to [Method 3] depending on the configured "whether PUCCH transmission is possible in a slot including a downlink resource".

In an embodiment, when PUCCH transmission is configured to not be possible in a slot including a downlink resource, and the slot n+k includes a downlink resource due to the XDD configuration, the UE may drop PUCCH transmission.

In an embodiment, when PUCCH transmission is configured to not be possible in a slot including a downlink resource and the slot n+k includes a downlink resource due to the XDD configuration, the UE may transmit a PUCCH in the slot n+k+$\alpha$ which does not include a downlink resource.

In an embodiment, when PUCCH transmission is configured to be possible in a slot including a downlink resource and a proper PUCCH resource does not exist in the slot n+k due to the XDD configuration, the UE may transmit a PUCCH by using a scaled PUCCH resource in the slot n+k. In this case, the scaling of the PUCCH resource may be performed within a predetermined range, and if the scaled PUCCH resource is outside of the predetermined range, PUCCH transmission may be dropped or a PUCCH may be transmitted in the slot n+k+$\alpha$.

In an embodiment, when PUCCH transmission is configured to be possible in a slot including a downlink resource and a proper PUCCH resource exists in the slot n+k, the UE may transmit a PUCCH by using the proper PUCCH resource in the slot n+k.

The operations according to the previously described "whether to apply scaling of a PUCCH resource" and "whether PUCCH transmission is possible in a slot including a downlink resource" may be performed in combination with each other. In this case, "whether PUCCH transmission is possible in a slot including a downlink resource" may be applied with priority over "whether scaling of a PUCCH resource is applied". For example, when PUCCH transmission in a slot including a downlink resource is configured to not be possible, the UE may not transmit a PUCCH in a slot including a downlink resource regardless of whether scaling of a PUCCH resource is applied. If PUCCH transmission in a slot including a downlink resource is configured to be possible, the UE may transmit a PUCCH, based on [Method 1] to [Method 3] depending on whether scaling of a PUCCH resource is applied.

According to an embodiment, scaling of a PUCCH resource and PUCCH transmission through a scaled PUCCH resource may be performed depending on a PUCCH format. For example, since PUCCH format 0 is transmitted using only one PRB, scaling in a frequency domain does not occur, and only scaling in a time domain may be performed. If only one symbol can be used for a PUCCH resource according to scaling in the time domain, the PUCCH format 0 may be transmitted through the corresponding one symbol. As another example, since PUCCH format 1 is transmitted using only one PRB, scaling in a frequency domain does not occur, and only scaling in a time domain may be performed. In the case of the PUCCH format 1, unlike the PUCCH format 0, the first symbol is used for DMRS transmission, and thus transmission of the PUCCH format 1 through one symbol may not be allowed. That is, with respect to the PUCCH format 1, scaling may be performed so that a PUCCH may be transmitted using at least two symbols, and if only one symbol can be used according to scaling, a corresponding PUCCH resource may be determined as an improper resource.

The UE may receive a configuration of a PUCCH format and a time or frequency resource (the number of symbols or the number of physical resource blocks (PRBs)) for each PUCCH resource through higher layer signaling. In consideration of the number of bits which may be transmitted through configured PUCCH resources and the number of bits of UCI to be transmitted through a PUCCH, the UE may select a PUCCH resource for UCI transmission among the configured PUCCH resources, or may transmit UCI by using the entire or a part of the selected (or indicated) PUCCH resource. For example, a method for selecting a PUCCH resource for UCI transmission among configured PUCCH resources may be as shown in [Table 32]. As shown in [Table 32], among the configured PUCCH resources, the UE may transmit UCI by using a PUCCH resource having the smallest number of bits (or smallest index) where the number of transmittable bits is greater than or equal to the number of bits of UCI to be transmitted. As another example, a method for transmitting UCI by using the entire or a part of a selected or indicated PUCCH resource may be as shown in [Table 33] or [Table 34]. As shown in [Table 33] or [Table 34], the UE may transmit UCI by using the minimum number of PRB( $M_{RB,\min}^{PUCCH}$ ) which can transmit the number of bits of UCI to be transmitted among $M_{RB}^{PUCCH}$ PRBs configured for a selected or indicated PUCCH resource.

[Table 32]

| If a UE has one or more CSI reports and zero or more HARQ-ACK/SR information bits to transmit in a PUCCH where the HARQ-ACK, if any, is in response to a PDSCH reception without a corresponding PDCCH<br><br>    - if any of the CSI reports are overlapping and the UE is provided by *multi-CSI-PUCCH-ResourceList* with $J \le 2$ PUCCH resources in a slot, for PUCCH format 2 and/or PUCCH format 3 and/or PUCCH format 4, as described in Clause 9.2.1, where the resources are indexed according to an ascending order for the product of a number of corresponding REs, modulation order $Q_m$, and configured code rate $r$,<br><br>    - if $(O_{ACK} + O_{SR} + O_{CSI} + O_{CRC}) \le \left(M_{RB}^{PUCCH} \cdot N_{sc,ctrl}^{RB} \cdot N_{symb\text{-}UCI}^{PUCCH} \cdot Q_m \cdot r\right)_0$ , the UE uses PUCCH format 2 resource 0, or the PUCCH format 3 resource 0, or the PUCCH format 4 resource 0<br><br>    - else if $(O_{ACK} + O_{SR} + O_{CSI} + O_{CRC}) > \left(M_{RB}^{PUCCH} \cdot N_{sc,ctrl}^{RB} \cdot N_{symb\text{-}UCI}^{PUCCH} \cdot Q_m \cdot r\right)_j$ and $(O_{ACK} + O_{SR} + O_{CSI} + O_{CRC}) \le \left(M_{RB}^{PUCCH} \cdot N_{sc,ctrl}^{RB} \cdot N_{symb\text{-}UCI}^{PUCCH} \cdot Q_m \cdot r\right)_{j+1}$ , $0 \le j < J$ - 1, the UE transmits a PUCCH conveying HARQ-ACK information, SR and CSI report(s) in a respective PUCCH where the UE uses the PUCCH format 2 resource $j$ + 1, or the PUCCH format 3 resource $j$ + 1, or the PUCCH format 4 resource $j$ + 1 |
|---|

(continued)

> - else the UE uses the PUCCH format 2 resource $J$ - 1, or the PUCCH format 3 resource $J$ - 1, or the PUCCH format 4 resource $J$ - 1 and the UE selects $N_{\mathrm{CSI}}^{\mathrm{reported}}$ CSI report(s) for transmission together with HARQ-ACK information and SR, when any, in ascending priority value as described in [6, TS 38.214]
>
> - else, the UE transmits the $O_{\mathrm{ACK}} + O_{\mathrm{SR}} + O_{\mathrm{CSI}} + O_{\mathrm{CRC}}$ bits in a PUCCH resource provided by *pucch-CSI-ResourceList* and determined as described in Clause 9.2.5

[Table 33]

> If a UE transmits a PUCCH with $O_{\mathrm{ACK}}$ HARQ-ACK information bits and $O_{\mathrm{CRC}}$ bits using PUCCH format 2 or PUCCH format 3 in a PUCCH resource that includes $M_{\mathrm{RB}}^{\mathrm{PUCCH}}$ PRBs, the UE determines a number of PRBs $M_{\mathrm{RB,min}}^{\mathrm{PUCCH}}$ for the PUCCH transmission to be the minimum number of PRBs, that is smaller than or equal to a number of PRBs $M_{\mathrm{RB}}^{\mathrm{PUCCH}}$ provided respectively by *nrofPRBs* of *PUCCH-format2* or *nrofPRBs* of *PUCCH-format3* and start from the first PRB from the number of PRBs, that results to $(O_{\mathrm{ACK}} + O_{\mathrm{CRC}}) \leq M_{\mathrm{RB,min}}^{\mathrm{PUCCH}} \cdot N_{\mathrm{sc,ctrl}}^{\mathrm{RB}} \cdot N_{\mathrm{symb\text{-}UCI}}^{\mathrm{PUCCH}} \cdot Q_m \cdot r$ and, if $M_{\mathrm{RB}}^{\mathrm{PUCCH}} > 1$, $(O_{\mathrm{ACK}} + O_{\mathrm{CRC}}) > \left(M_{\mathrm{RB,min}}^{\mathrm{PUCCH}} - 1\right) \cdot N_{\mathrm{sc,ctrl}}^{\mathrm{RB}} \cdot N_{\mathrm{symb\text{-}UCI}}^{\mathrm{PUCCH}} \cdot Q_m \cdot r$, where $N_{\mathrm{sc,ctrl}}^{\mathrm{RB}}$, $N_{\mathrm{symb\text{-}UCI}}^{\mathrm{PUCCH}}$, $Q_m$, and $r$ are defined in Clause 9.2.5.2. For PUCCH format 3, if $M_{\mathrm{RB,min}}^{\mathrm{PUCCH}}$ is not equal $2^{\alpha 2} \cdot 3^{\alpha 3} \cdot 5^{\alpha 5}$ according to [4, TS 38.211], $M_{\mathrm{RB,min}}^{\mathrm{PUCCH}}$ is increased to the nearest allowed value of *nrofPRBs* for *PUCCH-format3* [12, TS 38.331]. If $(O_{\mathrm{ACK}} + O_{\mathrm{CRC}}) > \left(M_{\mathrm{RB}}^{\mathrm{PUCCH}} - 1\right) \cdot N_{\mathrm{sc,ctrl}}^{\mathrm{RB}} \cdot N_{\mathrm{symb\text{-}UCI}}^{\mathrm{PUCCH}} \cdot Q_m \cdot r$, the UE transmits the PUCCH over $M_{\mathrm{RB}}^{\mathrm{PUCCH}}$ PRBs.

[Table 34]

> If a UE transmits a PUCCH with $O_{\mathrm{ACK}}$ HARQ-ACK information bits, $O_{\mathrm{SR}} = \lceil log_2(K + 1) \rceil$ SR bits, and $O_{\mathrm{CRC}}$ CRC bits using PUCCH format 2 or PUCCH format 3 in a PUCCH resource that includes $M_{\mathrm{RB}}^{\mathrm{PUCCH}}$ PRBs, the UE determines a number of PRBs $M_{\mathrm{RB,min}}^{\mathrm{PUCCH}}$ for the PUCCH transmission to be the minimum number of PRBs, that is smaller than or equal to a number of PRBs provided respectively by *nrofPRBs* in *PUCCH-format2* or *nrofPRBs* in *PUCCH-format3* and starts from the first PRB from the number of PRBs, that results to $(O_{\mathrm{ACK}} + O_{\mathrm{SR}} + O_{\mathrm{CRC}}) \leq$ $M_{\mathrm{RB,min}}^{\mathrm{PUCCH}} \cdot N_{\mathrm{sc,ctrl}}^{\mathrm{RB}} \cdot N_{\mathrm{symb\text{-}UCI}}^{\mathrm{PUCCH}} \cdot Q_m \cdot r$ and, if $M_{\mathrm{RB}}^{\mathrm{PUCCH}} > 1$, $(O_{\mathrm{ACK}} + O_{\mathrm{SR}} + O_{\mathrm{CRC}}) > \left(M_{\mathrm{RB,min}}^{\mathrm{PUCCH}} - 1\right) \cdot N_{\mathrm{sc,ctrl}}^{\mathrm{RB}} \cdot N_{\mathrm{symb\text{-}UCI}}^{\mathrm{PUCCH}} \cdot Q_m \cdot r$, where $N_{\mathrm{sc,ctrl}}^{\mathrm{RB}}$, $N_{\mathrm{symb\text{-}UCI}}^{\mathrm{PUCCH}}$, $Q_m$, and r are defined in Clause 9.2.5.2. For PUCCH format 3, if $M_{\mathrm{RB,min}}^{\mathrm{PUCCH}}$ is not equal $2^{\alpha 2} \cdot 3^{\alpha 3} \cdot 5^{\alpha 5}$ according to [4, TS 38.211], $M_{\mathrm{RB,min}}^{\mathrm{PUCCH}}$ is increased to the nearest allowed value of *nrofPRBs* for *PUCCH-format3* [12, TS 38.331]. If $(O_{\mathrm{ACK}} + O_{\mathrm{SR}} + O_{\mathrm{CRC}}) > \left(M_{\mathrm{RB}}^{\mathrm{PUCCH}} - 1\right) \cdot N_{\mathrm{sc,ctrl}}^{\mathrm{RB}} \cdot N_{\mathrm{symb\text{-}UCI}}^{\mathrm{PUCCH}} \cdot Q_m \cdot r$, the UE transmits the PUCCH over the $M_{\mathrm{RB}}^{\mathrm{PUCCH}}$ PRBs.

Parameters used in [Table 32] to [Table 34] above may be defined as in [Table 35] below.

[Table 35]

> Denote as
> - $O_{\mathrm{ACK}}$ a total number of HARQ-ACK information bits, if any

(continued)

- $O_{SR}$ a total number of SR bits. $O_{SR} = 0$ if there is no scheduling request bit; otherwise, $O_{SR} = \lceil \log_2(K+1) \rceil$ as described in Clause 9.2.5.1

$$O_{CSI} = \sum_{n=1}^{N_{CSI}^{total}} \left( O_{CSI\text{-part1},n} + O_{CSI\text{-part2},n} \right)$$

, where $O_{CSI\text{-part1},n}$ is a number of Part 1 CSI report bits for CSI report with priority value $n$, $O_{CSI\text{-part2},n}$ is a number of Part 2 CSI report bits, if any, for CSI report with priority value $n$ [6, TS 38.214], and $N_{CSI}^{total}$ is a number of CSI reports that include overlapping CSI reports

- $O_{CRC} = O_{CRC,CSI\text{-part1}} + O_{CRC,CSI\text{-part2}}$, where $O_{CRC,CSI\text{-part1}}$ is a number of CRC bits, if any, for encoding HARQ-ACK, SR and Part 1 CSI report bits and $O_{CRC,CSI\text{-part2}}$ is a number of CRC bits, if any, for encoding Part 2 CSI report bits

In the following

- $r$ is a code rate given by *maxCodeRate* as in Table 9.2.5.2-1.

- $M_{RB}^{PUCCH}$ is a number of PRBs for PUCCH format 2, or PUCCH format 3, or PUCCH format 4, respectively, where $M_{RB}^{PUCCH}$ is provided by *nrofPRBs* in *PUCCH-format2* for PUCCH format 2 or by *nrofPRBs* in *PUCCH-format3* for PUCCH format 3, and $M_{RB}^{PUCCH} = 1$ for PUCCH format 4

- $N_{sc,ctrl}^{RB} = N_{sc}^{RB} - 4$ for PUCCH format 2 or, if the PUCCH resource with PUCCH format 2 includes an orthogonal cover code with length $N_{SF}^{PUCCH,2}$ provided by *occ-Length*,

$N_{sc,ctrl}^{RB} = \left( N_{sc}^{RB} - 4 \right) / N_{SF}^{PUCCH,2}$ , $N_{sc,ctrl}^{RB} = N_{sc}^{RB}$ for PUCCH format 3 or, if the PUCCH resource with PUCCH format 3 includes an orthogonal cover code with length $N_{SF}^{PUCCH,3}$ provided by *occ-Length*,

$N_{sc,ctrl}^{RB} = N_{sc}^{RB} / N_{SF}^{PUCCH,3}$ , and $N_{sc,ctrl}^{RB} = N_{sc}^{RB} / N_{SF}^{PUCCH,4}$ for PUCCH format 4, where $N_{sc}^{RB}$ is a number of subcarriers per resource block [4, TS 38.211]

- $N_{symb\text{-}UCI}^{PUCCH}$ is equal to a number of PUCCH symbols $N_{symb}^{PUCCH,2}$ for PUCCH format 2 provided by *nrofSymbols* in *PUCCH-format2*. For PUCCH format 3 or for PUCCH format 4, $N_{symb\text{-}UCI}^{PUCCH}$ is equal to a number of PUCCH symbols $N_{symb}^{PUCCH,3}$ for PUCCH format 3 or equal to a number of PUCCH symbols $N_{symb}^{PUCCH,4}$ for PUCCH format 4 provided by *nrofSymbols* in *PUCCH-format3* or *nrofSymbols* in *PUCCH-format4*, respectively, after excluding a number of symbols used for DM-RS transmission for PUCCH format 3 or for PUCCH format 4, respectively [4, TS 38.211]

- $Q_m = 1$ if pi/2-BPSK is the modulation scheme and $Q_m = 2$ if QPSK is the modulation scheme as indicated by *pi2BPSK* for PUCCH format 3 or PUCCH format 4. For PUCCH format 2, $Q_m = 2$

In an XDD system according to an embodiment of the disclosure, at least a part of a time-frequency resource of a configured PUCCH resource may overlap a downlink resource according to an XDD configuration. As such, if the at least a part of the time-frequency resource of the PUCCH resource overlaps the downlink resource, the corresponding downlink resource cannot be used for PUCCH transmission, and thus a method for transmitting a PUCCH in consideration of a downlink resource according to an XDD configuration is required.

According to an embodiment, in the XDD system, at least some of the parameters disclosed in [Table 35] may be redefined based on a value excluding a portion corresponding to a resource configured as a downlink resource in a time-frequency resource configured for a PUCCH resource. As an example, when $M_{RB}^{PUCCH}$ PRBs and $N_{symb}^{PUCCH}$ symbols are configured for PUCCH#X, and among the configured resources of the PUCCH#X, $O_{RB}^{XDD}$ PRBs and $O_{symb}^{XDD}$ symbols are downlink resources due to an XDD configuration, the number of bits that the PUCCH#X can transmit may be calculated based on $M_{RB}^{PUCCH}-O_{RB}^{XDD}$ and $N_{symb}^{PUCCH}-O_{symb}^{XDD}$. That is, in the equation for calculating the number of bits that the PUCCH#X can transmit, $M_{RB}^{PUCCH}$ and $N_{symb}^{PUCCH}$ may be redefined as $M_{RB}^{PUCCH}-O_{RB}^{XDD}$ and $N_{symb}^{PUCCH}-O_{symb}^{XDD}$, respectively, in consideration of a downlink resource according to the XDD configuration. It should be noted that $O_{RB}^{XDD}$ and $O_{symb}^{XDD}$ are values which do not have fixed values but can be changed depending on a PUCCH resource and an XDD configuration. As such, parameters indicating the number of PRBs and the number of symbols in the equation for PUCCH resource selection may be changed or redefined in consideration of a downlink resource according to an XDD configuration. When the number of bits of PUCCH#X calculated based on the parameters redefined in consideration of the downlink resource according to the XDD configuration is greater than the number of bits of UCI to be transmitted, UCI may be transmitted using the PUCCH#X based on the conditions disclosed in [Table 32] to [Table 34].

According to an embodiment, among PUCCH resources configured in the XDD system, a PUCCH resource including a downlink resource according to an XDD configuration among time-frequency resources configured for a PUCCH resource may not be considered as a PUCCH resource for transmitting UCI. As an example, when $M_{RB}^{PUCCH}$ PRBs and $N_{symb}^{PUCCH}$ symbols are configured for PUCCH#X, and among the configured resources of the PUCCH#X, $O_{RB}^{XDD}$ PRBs and $O_{symb}^{XDD}$ symbols are downlink resources due to an XDD configuration, the PUCCH#X may not be considered as a PUCCH resource for transmitting UCI. That is, the UE may not transmit UCI by using the corresponding PUCCH#X regardless of whether a UCI bit can be transmitted even excluding a downlink resource according to the XDD configuration. In this case, the base station does not indicate, to the UE, a PUCCH resource overlapping the downlink resource according to the XDD configuration among the configured PUCCH resources, or the UE may expect not to receive, from the base station, an indication for the PUCCH resource overlapping the downlink resource according to the XDD configuration among the configured PUCCH resources. Alternatively, the UE may select a PUCCH resource for UCI transmission in a PUCCH resource selection algorithm according to [Table 32], excluding the PUCCH resource overlapping the downlink resource according to the XDD configuration.

When a PUCCH is transmitted, the UE may map a DMRS to a specific symbol or resource according to a method determined for each PUCCH format, and transmit the mapped DMRS. For example, DMRS symbol positions of PUCCH formats 3 and 4 may be determined as shown in [Table 23] depending on whether intra-slot frequency hopping is performed and whether an additional DMRS symbol is configured. In the example of [Table 23], when the configured PUCCH length is 5 symbols, a DMRS may be transmitted in the first (index=0) and fourth (index=3) symbols of the PUCCH. As another example, when the configured PUCCH length is 12 symbols and an additional DMRS is not configured, a DMRS may be transmitted in the third (index=2) and ninth (index=8) symbols of the PUCCH. If the configured PUCCH length is 12 symbols and an additional DMRS is configured, a DMRS may be transmitted in the second (index=1), fifth (index=4), eighth (index=7), and eleventh (index=11) symbols of the PUCCH. As such, a DMRS may be mapped in a specific symbol or resource according to a method determined for each PUCCH format. However, if at least a part of a PUCCH transmission resource is configured as a downlink resource due to an XDD configuration, the corresponding downlink resource cannot be used as a resource for DMRS transmission of the PUCCH. Therefore, a method for transmitting a DMRS of a PUCCH in an XDD system is required.

According to an embodiment, when M symbols for configured PUCCH length N are configured as downlink resources due to an XDD configuration and thus cannot be used for PUCCH or PUCCH DMRS transmission, the UE may map a DMRS sequence by assuming that a PUCCH length is N-M and determining a DMRS transmission symbol of a PUCCH. For example, when the PUCCH length is configured to be 5 through higher layer signaling, and the first symbol of the symbols is configured as a downlink resource due to the XDD configuration and thus cannot be used for PUCCH or PUCCH DMRS transmission, the UE may assume that the PUCCH length is 5-1=4, redefine a symbol index, based on 4 symbols which can be used for PUCCH or PUCCH DMRS transmission, and then map a DMRS to a symbol according to PUCCH length=4.

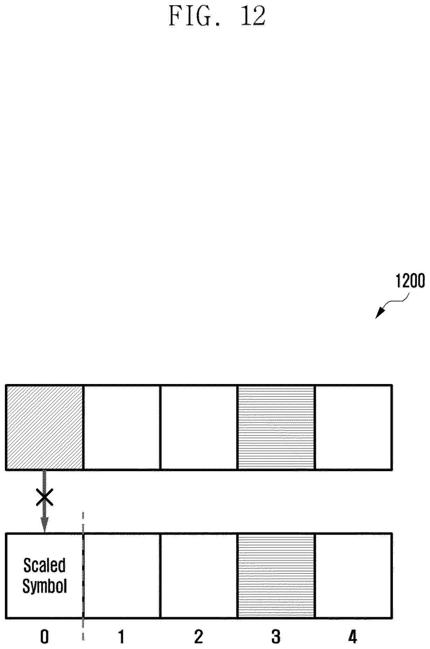

According to an embodiment, when some symbols for configured PUCCH length N are configured as downlink resources due to an XDD configuration and thus cannot be used for PUCCH and PUCCH DMRS transmission, the UE may transmit a DMRS sequence corresponding to the symbols configured as the downlink resources without mapping the DMRS sequence, under the assumption of the PUCCH length N. For example, when the PUCCH length is configured to be 5 as shown in FIG. 12, and the first symbol of the symbols is configured as a downlink resource due to the XDD configuration and thus cannot be used for PUCCH or PUCCH DMRS transmission, the UE may map and transmit a DMRS sequence to be mapped to the fourth symbol without mapping a DMRS sequence to be mapped to the first symbol, among the DMRS sequences to be mapped to the first and fourth symbols (1200).

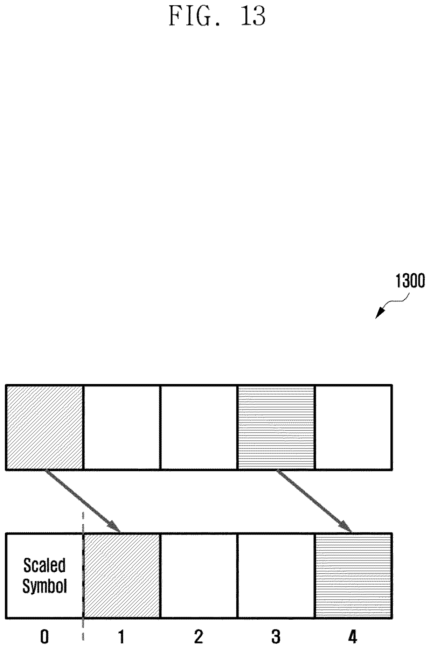

According to an embodiment, when some symbols for configured PUCCH length N are configured as downlink resources due to an XDD configuration and thus cannot be used for PUCCH and PUCCH DMRS transmission, the UE may redefine a symbol index by excluding symbols which are configured as downlink resources and thus cannot be used for PUCCH or PUCCH DMRS transmission, under the assumption of the PUCCH length N, and then map and transmit a DMRS sequence. For example, when the PUCCH length is configured to be 5 as shown in FIG. 13, and the first symbol of the symbols is configured as a downlink resource due to the XDD configuration and thus cannot be used for PUCCH or PUCCH DMRS transmission, the UE may redefine a symbol index from the second symbol excluding the first symbol and transmit a DMRS sequence in the first and third symbols with reference to the redefined index (1300). In this case, a DMRS sequence may be mapped to each of the second and fourth symbols with reference to an initially configured PUCCH resource.

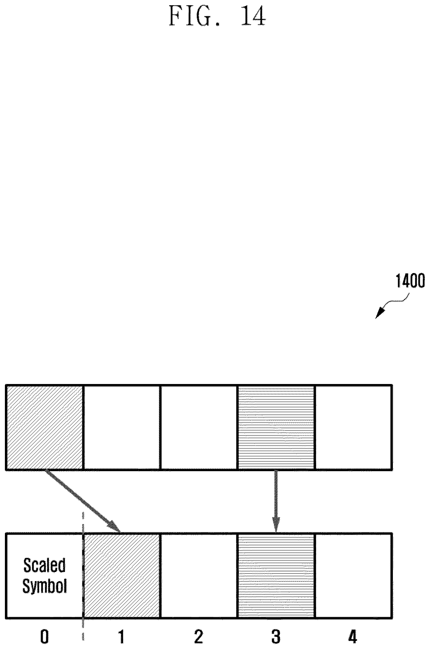

According to an embodiment, when some symbols for configured PUCCH length N are configured as downlink resources due to an XDD configuration and thus cannot be used for PUCCH and PUCCH DMRS transmission, the UE may map, to the next symbol, a DMRS sequence corresponding to the symbols which are configured as the downlink resources and thus cannot be used for PUCCH or PUCCH DMRS transmission, under the assumption of the PUCCH length N, and transmit the mapped DMRS sequence. For example, when the PUCCH length is configured to be 5 as shown in FIG. 14, and the first symbol of the symbols is configured as a downlink resource due to the XDD configuration and thus cannot be used for PUCCH or PUCCH DMRS transmission, the UE may map, to the second symbol, a DMRS sequence to be mapped to the first symbol, and map and transmit a DMRS sequence to be mapped to the fourth symbol, among the DMRS sequences to be mapped to the first and fourth symbols (1400).

In an embodiment, when a predetermined number (X) or more of configured PUCCH symbols overlap downlink resources according to an XDD configuration and cannot be used for PUCCH or PUCCH DMRS transmission, an additional DMRS configuration may not be applied. For example, if a PUCCH length is configured to be 12 through higher layer signaling, but 3 symbols cannot be used for PUCCH or PUCCH DMRS transmission due to the XDD configuration, the UE may transmit a PUCCH DMRS without applying an additional DMRS. The base station may not configure an additional DMRS to be applied to the UE, and the UE may not expect to receive a configuration for application of an additional DMRS. Alternatively, the UE may not apply an additional DMRS under a predetermined condition, regardless of whether the UE has received a configuration for application of an additional DMRS from the base station.

The predetermined number (X) may be previously configured to be a specific value or may be configured by the base station. The UE may not apply an additional DMRS when more than the number of symbols according to a specific value cannot be used for PUCCH or PUCCH DMRS due to the XDD configuration. Alternatively, the predetermined number (X) may be defined as a value which is changed depending on a condition. For example, the predetermined number (X) may be defined as a value which is changed based on a PUCCH length at which an additional DMRS is not transmitted according to a configured PUCCH length. As shown in [Table 23], with respect to a PUCCH having a length of 9 or less, when an additional DMRS is configured and when an additional DMRS is not configured, a PUCCH DMRS is transmitted in the same symbol. Therefore, X may be determined variably according to a PUCCH length which is configured not to apply an additional DMRS when the number of symbols capable of transmitting a PUCCH or PUCCH DMRS is 9 or less due to the XDD configuration. For example, when the configured PUCCH length is 11, X=2, and when the PUCCH length is 12, X=3.

A specific method for transmitting a PUCCH DMRS with or without applying an additional DMRS may follow at least one of the methods described above. For example, when a PUCCH length is configured to be 12 and it is determined not to apply an additional DMRS since 3 symbols cannot be used for PUCCH or PUCCH DMRS transmission due to an XDD configuration, the UE may map and transmit a DMRS sequence according to the above-described method, based on DMRS symbol indexes (index 2, 8) when the PUCCH length is 12 and an additional DMRS is not applied. As another example, when the PUCCH length is configured to be 12 and it is determined not to apply an additional DMRS since 3 symbols cannot be used for PUCCH or PUCCH DMRS transmission due to an XDD configuration, the UE may map and transmit a DMRS sequence according to the above-described method, based on DMRS symbol indexes (index 1, 6) when the PUCCH length is 12-3=9.

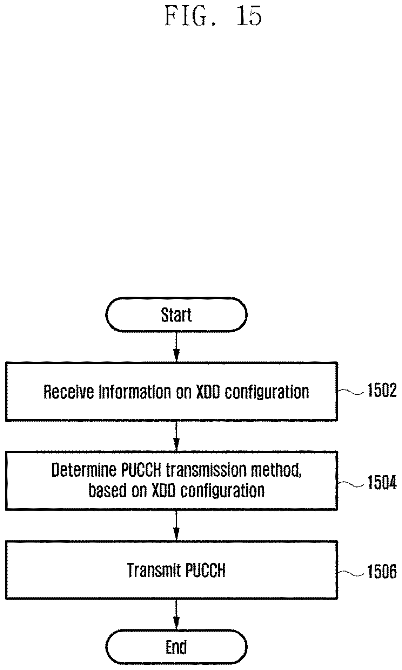

FIG. 15 illustrates a UE operation of transmitting a PUCCH in an XDD system according to an embodiment of the disclosure.

Referring to FIG. 15, a UE may receive information for an XDD configuration from a base station (1502). The UE may determine a method for transmitting a PUCCH according to the above-described embodiments, based on an XDD configuration identified according to the received information (1504). For example, the UE may determine to transmit a PUCCH or drop PUCCH transmission according to the above-described embodiments depending on an XDD configuration and whether a proper PUCCH resource exists in a slot through which a PUCCH is to be transmitted based on a PUCCH resource configuration. Alternatively, the UE may select a PUCCH resource according to the above-described embodiments in consideration of a resource configured as a downlink in the XDD configuration, or determine the entire or a part of a selected PUCCH resource for actual PUCCH transmission. Alternatively, the UE may determine a PUCCH DMRS mapping method according to the above-described embodiments in consideration of the resource configured as the downlink in the XDD configuration. Afterward, the UE may transmit the PUCCH, based on the determined method (1506). It should be noted that if it is determined to drop PUCCH transmission, a PUCCH transmission step in step 1506 may be omitted.

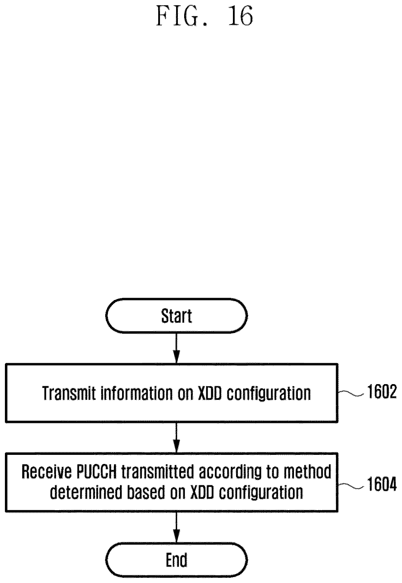

FIG. 16 illustrates a base station operation of receiving a PUCCH in an XDD system according to an embodiment of the disclosure.

Referring to FIG. 16, a base station may transmit information for an XDD configuration to a UE (1602). Afterward, the base station may receive, from the UE, a PUCCH transmitted according to a PUCCH transmission method determined based on the corresponding XDD configuration (1604). It should be noted that if it is determined to drop PUCCH transmission, a PUCCH transmission step in step 1604 may be omitted.

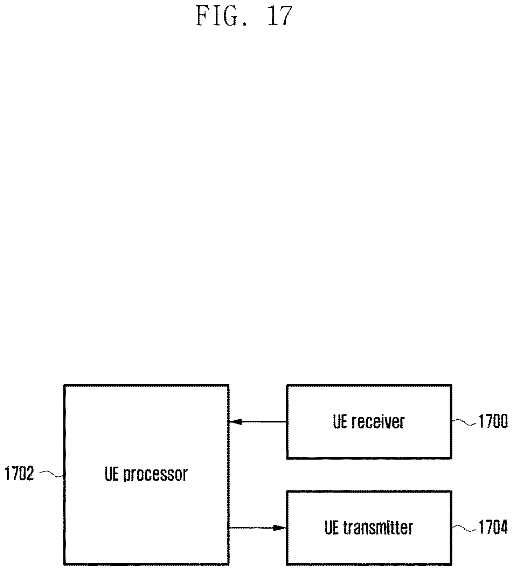

FIG. 17 illustrates the structure of a UE according to an embodiment of the disclosure.

Referring to FIG. 17, the UE may include a UE receiving unit 1700, a UE transmitting unit 1704, and a UE processing unit 1702. In the embodiment of the disclosure, the UE receiving unit 1700 and the UE transmitting unit 1704 may be collectively referred to as a transceiver. The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and down-convert the frequency thereof, and the like. In addition, the transceiver may receive signals through a radio channel, output the same to the UE processing unit 1702, and transmit signals output from the UE processing unit 1702 through the radio channel. The UE processing unit 1702 may control a series of processes such that the UE can operate according to the above-described embodiments of the disclosure.

FIG. 26 illustrates the structure of a base station according to an embodiment of the disclosure.

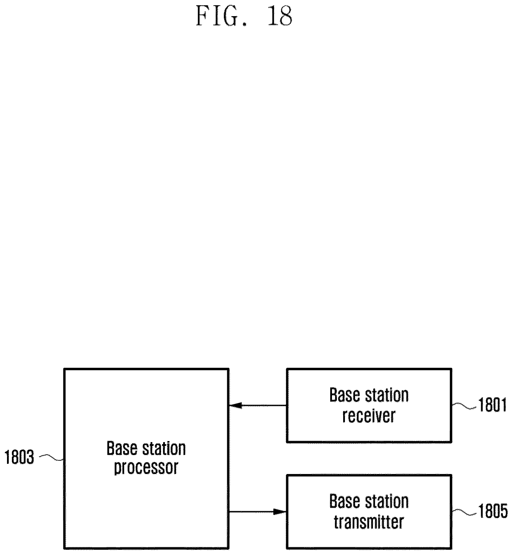

Referring to FIG. 18, the UE may include a base station receiving unit 1801, a base station transmitting unit 1805, and a base station processing unit 1803. In the embodiment of the disclosure, the base station receiving unit 1801 and the base station transmitting unit 1805 may be collectively referred to as a transceiver. The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. In addition, the transceiver may receive signals through a radio channel, output the same to the base station processing unit 1803, and transmit signals output from the base station processing unit 1803 through the radio channel. The base station processing unit 1803 may control a series of processes such that the base station can operate according to the above-described embodiments of the disclosure.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Furthermore, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Furthermore, the above respective embodiments may be employed in combination, as necessary. For example, a part of one embodiment of the disclosure may be combined with a part of another embodiment to operate a base station and a terminal. Moreover, embodiments of the disclosure may be applied to other communication systems, and other variants based on the technical idea of the embodiments may also be implemented. For example, the embodiments may be applied to LTE, 5G, or NR systems.

**Claims**

1. A method of a terminal in a communication system, the method comprising:

   receiving XDD configuration information for configuring an uplink-downlink resource configuration of the terminal from a base station;
   identifying whether a physical uplink control channel (PUCCH) resource of a first slot satisfies a preconfigured condition, based on the XDD configuration information; and
   transmitting a PUCCH to the base station, based on whether the PUCCH resource of the first slot satisfies the preconfigured condition.

2. The method of claim 1, wherein the identifying of whether the PUCCH resource of the first slot satisfies the preconfigured condition comprises, in case that at least a part of the first slot includes a downlink resource, the PUCCH resource configured in the first slot includes a downlink resource, or the PUCCH resource configured in the first slot includes downlink resources, the number of which is larger than or equal to a predetermined range, identifying that the PUCCH resource of the first slot satisfies the preconfigured condition.

3. The method of claim 1, comprising:

   in case that the PUCCH resource of the first slot is identified to satisfy the preconfigured condition, dropping PUCCH transmission;
   based on a PUCCH resource of a second slot that does not satisfy the preconfigured condition, transmitting the PUCCH in the second slot; or
   transmitting the PUCCH in the first slot, based on a scaled PUCCH resource excluding a downlink resource based on the XDD configuration information in the configured PUCCH resource.

4. The method of claim 1, wherein the transmitting of the PUCCH to the base station comprises transmitting the PUCCH, further based on whether scaling is applicable to the configured PUCCH resource.

5. The method of claim 1, wherein the transmitting of the PUCCH to the base station comprises transmitting the PUCCH, further based on whether PUCCH transmission is possible in a slot including a downlink resource.

6. The method of claim 1, comprising:

   determining a PUCCH resource among configured PUCCH resources in consideration of a downlink resource based on the XDD configuration information; or
   determining a resource to be used for actual PUCCH transmission in consideration of a downlink resource based on the XDD configuration information.

7. The method of claim 1, comprising mapping a demodulation reference signal (DMRS) sequence for the PUCCH to a symbol and transmitting the mapped sequence, in consideration of a downlink resource based on the XDD configuration information.

8. A terminal in a communication system, the terminal comprising:

   a transceiver; and
   a controller configured to receive XDD configuration information for configuring an uplink-downlink resource configuration of the terminal from a base station, identify whether a physical uplink control channel (PUCCH) resource of a first slot satisfies a preconfigured condition, based on the XDD configuration information, and transmit a PUCCH to the base station, based on whether the PUCCH resource of the first slot satisfies the preconfigured condition.

9. The terminal of claim 8, wherein the controller is configured to, in case that at least a part of the first slot includes a downlink resource, the PUCCH resource configured in the first slot includes a downlink resource, or the PUCCH resource configured in the first slot includes downlink resources, the number of which is larger than or equal to a predetermined range, identify that the PUCCH resource of the first slot satisfies the preconfigured condition.

10. The terminal of claim 8, wherein the controller is configured to, in case that the PUCCH resource of the first slot is identified to satisfy the preconfigured condition, drop PUCCH transmission, based on a PUCCH resource of a second slot that does not satisfy the preconfigured condition, transmit the PUCCH in the second slot, or transmit the PUCCH in the first slot, based on a scaled PUCCH resource excluding a downlink resource based on the XDD configuration information in the configured PUCCH resource.

11. The terminal of claim 8, wherein the controller is configured to transmit the PUCCH, further based on whether scaling is applicable to the configured PUCCH resource.

12. The terminal of claim 8, wherein the controller is configured to transmit the PUCCH, further based on whether PUCCH transmission is possible in a slot including a downlink resource.

13. The terminal of claim 8, wherein the controller is configured to:

   determine a PUCCH resource among configured PUCCH resources in consideration of a downlink resource based on the XDD configuration information; or
   determine a resource to be used for actual PUCCH transmission in consideration of a downlink resource based on the XDD configuration information.

14. A method of a base station in a communication system, the method comprising:

   transmitting XDD configuration information for configuring an uplink-downlink resource configuration of a terminal to the terminal; and
   receiving, from the terminal, a physical uplink control channel (PUCCH) transmitted based on whether a PUCCH resource of a first slot satisfies a preconfigured condition according to the XDD configuration information.

15. A base station in a communication system, the base station comprising:

   a transceiver; and
   a controller configured to transmit XDD configuration information for configuring an uplink-downlink resource configuration of a terminal to the terminal, and receive, from the terminal, a physical uplink control channel (PUCCH) transmitted based on whether a PUCCH resource of a first slot satisfies a preconfigured condition according to the XDD configuration information.

# FIG. 1

subframe (110)

$N_{symb}^{subframe,\mu}$ OFDM symbols

1 OFDM symbols (102)

1 subcarrier (103)

$k = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element $(k, l)$ (101)

Frequency

Time

$\bar{l} = 0$

$\bar{l} = 14 \cdot 2^{\mu} - 1$

$k = 0$

EP 4 440 222 A1

# FIG. 2

# FIG. 3

Bandwidth part#1
(301)

Bandwidth part#2
(302)

UE bandwidth
(300)

Frequency

# FIG. 4

Length [404]

Frequency resource [403]

UE bandwidth part [410]

Frequency

Time

Slot [420]

control resource set#1 [401]

control resource set#2 [402]

# FIG. 5

1 symbol (501)

1 PRB (502)

DMRS (505)

REG (503)

CCE (504)

# FIG. 6

Slot [601]

Symbol [602]

Period [603]

1. Cell-specific semi-static UL/DL configuration (SIB) [610]

Number of consecutive downlink slots [611]

Number of consecutive downlink symbols [612]

Number of consecutive uplink symbols [614]

Number of consecutive uplink slots [613]

2. UE-specific semi-static UL/DL configuration (dedicated RRC) [620]

Slot [621]    Slot [622]

Number of consecutive downlink symbols [623]

Number of consecutive uplink symbols [624]

Number of consecutive downlink symbols [625]

Number of consecutive uplink symbols [626]

3. UE-group dynamic UL/DL configuration (DCI format 2_0) [630]

: Downlink resource [604]

: Flexible resource [605]

: Uplink resource [606]

Slot format indicator [631]

Slot format indicator [632]

EP 4 440 222 A1

# FIG. 7

# FIG. 8

# FIG. 9

**N+K**

900

PDSCH

PUCCH(drop)

| D | D | D | D | D | | | | | |

Slot N
(901)

Slot n+k
(902)

Frequency

Time

D  Downlink (903)

U  Uplink (904)

# FIG. 10

N+K+1

1000

PDSCH

PUCCH

| D | D | D | D | D | D | D | U | U | U |

Slot N
(1001)

Slot n+k
(1002)

Slot n+k+1
(1005)

Frequency

Time

| D | Downlink (1003) |

| U | Uplink (1004) |

# FIG. 11

# FIG. 12

1200

Scaled
Symbol

0    1    2    3    4

FIG. 13

1300

Scaled
Symbol

0      1      2      3      4

FIG. 14

1400

Scaled
Symbol

0    1    2    3    4

FIG. 15

Start

Receive information on XDD configuration — 1502

Determine PUCCH transmission method,
based on XDD configuration — 1504

Transmit PUCCH — 1506

End

71

FIG. 16

```
           ╭─────────────╮
           │    Start     │
           ╰──────┬──────╯
                  │
                  ▼
  ┌──────────────────────────────────┐
  │ Transmit information on XDD       │───1602
  │ configuration                    │
  └──────────────┬───────────────────┘
                 │
                 ▼
  ┌──────────────────────────────────┐
  │ Receive PUCCH transmitted        │
  │ according to method              │───1604
  │ determined based on XDD          │
  │ configuration                    │
  └──────────────┬───────────────────┘
                 │
                 ▼
           ╭─────────────╮
           │     End      │
           ╰─────────────╯
```

FIG. 17

# FIG. 18

1803 Base station processor

Base station receiver 1801

Base station transmitter 1805

## INTERNATIONAL SEARCH REPORT

International application No.

**PCT/KR2022/017847**

| A. | CLASSIFICATION OF SUBJECT MATTER |
|---|---|

**H04W 72/04**(2009.01)i; **H04L 5/00**(2006.01)i; **H04L 5/14**(2006.01)i

According to International Patent Classification (IPC) or to both national classification and IPC

| B. | FIELDS SEARCHED |
|---|---|

Minimum documentation searched (classification system followed by classification symbols)

H04W 72/04(2009.01); H04L 1/18(2006.01); H04L 27/26(2006.01); H04L 5/00(2006.01); H04W 76/15(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: XDD UL-DL configuration, condition, PUCCH resource, slot

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021-071343 A1 (SAMSUNG ELECTRONICS CO., LTD.) 15 April 2021 (2021-04-15) See paragraphs [0125]-[0188]; claims 1-5; and figures 10-14. | 1-2,5-6,8-9,12-15 |
| A | | 3-4,7,10-11 |
| A | WO 2021-243287 A1 (QUALCOMM INCORPORATED) 02 December 2021 (2021-12-02) See paragraph [0082]. | 1-15 |
| A | US 2020-0351035 A1 (TELEFONAKTIEBOLAGET L M ERICSSON (PUBL)) 05 November 2020 (2020-11-05) See paragraphs [0081]-[0094]; and figure 6. | 1-15 |
| A | US 2020-0413463 A1 (SHARP KABUSHIKI KAISHA et al.) 31 December 2020 (2020-12-31) See paragraphs [0048]-[0073]; and figure 2. | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 February 2023** | **16 February 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/017847** |

| C. | DOCUMENTS CONSIDERED TO BE RELEVANT | |
|---|---|---|
| Category* | Citation of document, with indication, where appropriate, of the relevant passages | Relevant to claim No. |
| A | SAMSUNG RESEARCH. XDD (Cross Division Duplex): Extending Coverage of 5G TDD Carriers. 31 May 2021.<br>[Retrieved on 03 February 2023]. Retrieved from <URL: https://cdn.codeground.org/nsr/ downloads/researchareas/white_paper_XDD.pdf>.<br>See section 3; and figure 3. | 1-15 |

Form PCT/ISA/210 (second sheet) (July 2022)

<table>
<tr><td colspan="3">INTERNATIONAL SEARCH REPORT</td><td colspan="2">International application No.</td></tr>
<tr><td colspan="3">Information on patent family members</td><td colspan="2">**PCT/KR2022/017847**</td></tr>
</table>

| Patent document cited in search report | | | Publication date (day/month/year) | Patent family member(s) | | | Publication date (day/month/year) |
|---|---|---|---|---|---|---|---|
| WO | 2021-071343 | A1 | 15 April 2021 | EP | 4033710 | A1 | 27 July 2022 |
| | | | | KR | 10-2021-0043304 | A | 21 April 2021 |
| WO | 2021-243287 | A1 | 02 December 2021 | None | | | |
| US | 2020-0351035 | A1 | 05 November 2020 | CN | 105308892 | A | 03 February 2016 |
| | | | | CN | 105308892 | B | 09 November 2018 |
| | | | | EP | 2982068 | A1 | 10 February 2016 |
| | | | | EP | 2982068 | B1 | 07 June 2017 |
| | | | | EP | 3273631 | A1 | 24 January 2018 |
| | | | | EP | 3273631 | B1 | 20 November 2019 |
| | | | | EP | 3664329 | A1 | 10 June 2020 |
| | | | | US | 10135581 | B2 | 20 November 2018 |
| | | | | US | 10666401 | B2 | 26 May 2020 |
| | | | | US | 2016-0081077 | A1 | 17 March 2016 |
| | | | | US | 2017-0222766 | A1 | 03 August 2017 |
| | | | | US | 2019-0140785 | A1 | 09 May 2019 |
| | | | | US | 9642124 | B2 | 02 May 2017 |
| | | | | WO | 2014-185850 | A1 | 20 November 2014 |
| US | 2020-0413463 | A1 | 31 December 2020 | CN | 111713133 | A | 25 September 2020 |
| | | | | EP | 3755045 | A1 | 23 December 2020 |
| | | | | JP | 2019-140634 | A | 22 August 2019 |
| | | | | US | 11399402 | B2 | 26 July 2022 |
| | | | | WO | 2019-160089 | A1 | 22 August 2019 |

Form PCT/ISA/210 (patent family annex) (July 2022)